(19) Europäisches Patentamt / European Patent Office / Office européen des brevets

(11) **EP 3 026 460 A1**

(12) **DEMANDE DE BREVET EUROPEEN**

(43) Date de publication:
**01.06.2016 Bulletin 2016/22**

(51) Int Cl.:
***G01S 19/07*** (2010.01)

(21) Numéro de dépôt: **15196221.4**

(22) Date de dépôt: **25.11.2015**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD**

(30) Priorité: **26.11.2014 FR 1402678**

(71) Demandeurs:
• **THALES**
 **92400 Courbevoie (FR)**
• **Centre National d'Etudes Spatiales**
 **75039 Paris Cedex 01 (FR)**

(72) Inventeurs:
• **ALBITAR, Hanaa**
 **31037 TOULOUSE (FR)**
• **CHARLOT, Bernard**
 **31000 TOULOUSE (FR)**
• **RAIMONDI, Mathieu**
 **31037 TOULOUSE (FR)**
• **RIES, Lionel**
 **31401 TOULOUSE (FR)**

(74) Mandataire: **Tanguy, Yannick et al**
**Marks & Clerk France**
**Conseils en Propriete Industrielle**
**Immeuble Visum**
**22, avenue Aristide Briand**
**94117 Arcueil Cedex (FR)**

(54) **ARCHITECTURE OPTIMISÉE D'UNE STATION SOL SECONDAIRE DE GÉNÉRATION D'UN SIGNAL SBAS SECONDAIRE DANS UN SYSTÈME SBAS ET PROCÉDÉ DE GÉNÉRATION D'UN SIGNAL SBAS SECONDAIRE**

(57) Une station NLES secondaire comprend un générateur (122) d'un signal SBAS secondaire dans une bande secondaire en étant dépourvue d'équipements pouvant impacter la génération de signaux SBAS existants de niveau SoL par une première station NLES-G2.

La station NLES secondaire comprend une chaine de réception(106 ; 120, 122, 124), configurée pour recevoir en voie descendante dans la bande SBAS secondaire le signal SBAS secondaire issu de la chaîne d'émission (106) et retransmis par un satellite SBAS (10) associé.

La chaîne de réception (106) est configurée pour contrôler la synchronisation et la cohérence du code par rapport à la porteuse du signal SBAS secondaire reçu au travers d'une boucle de correction de la phase de la porteuse et de la phase du code du signal SBAS secondaire du signal émis par la chaîne d'émission (104).

FIG.2

EP 3 026 460 A1

**Description**

La présente invention concerne l'architecture d'une station sol secondaire de génération d'un signal SBAS secondaire dans un système SBAS d'augmentation de couverture par satellites (dénomination en anglais de Satellite Based Augmentation System). La station sol secondaire de génération d'un signal SBAS secondaire est configurée pour transmettre, en bande E5b ou en bande E6, un signal secondaire supportant des services secondaires non critiques, c'est-à-dire non soumis aux exigences de sécurité vitale SoL (en anglais Safety of Life) d'un service critique de navigation, et ne pas perturber les services critiques déjà certifiés et transmis en bandes L1/L5.

La présente invention concerne également un procédé de génération d'un signal SBAS secondaire mis en oeuvre par une station sol secondaire.

Parmi les systèmes SBAS d'augmentation par satellites, le système européen EGNOS (dénommé en anglais European Geostationary Navigation Overlay System) actuellement en service fournit un service mono-fréquence en bande L1 de niveau sécuritaire SoL.

Dans un futur proche, le service SoL EGNOS mono-fréquence en bande L1 sera remplacé par un service critique EGNOS bi-fréquences L1/L5 de niveau SoL. A cette fin, le segment spatial a été reconfiguré pour être capable de traiter un canal E5 de largeur de bande égale à 50 MHz et dans lequel la partie inférieure de la bande est allouée au signal L5.

La bande restante E5b disponible au sein de ce canal E5 pourra ainsi être utilisée pour transmettre un signal secondaire EGNOS, non assujetti aux exigences d'un service de niveau sécuritaire SoL pour ses propres applications, mais également ne présentant pas d'impact sur le service de niveau SoL déjà testé et certifié, et supporté par le signal bi-fréquences L1/L5.

Actuellement, le système EGNOS qui fournit un service critique de niveau SoL mono-fréquence L1, utilise un ensemble de premières stations sol de navigation NLES (dénommées en anglais Navigation Land Earth Stations), configurées chacune pour générer un signal SoL mono-fréquence en bande L1 et le diffuser en tant que destination finale à des utilisateurs au travers de charges utiles de type GEO (dénomination en anglais de GEostationary Orbit), embarquées à bord des satellites géostationnaires en fonctionnement Inmarsat 3, Inmarsat 4 et Artemis. Le signal de voie montante correspondant au signal L1, émis par les premières stations NLES vers les satellites géostationnaires, et retransmis par lesdits satellites aux premières stations NLES, est ensuite traité par les mêmes premières stations NLES afin d'être synchronisé sur le temps du système EGNOS, dénommé Temps du Réseau EGNOS ENT (en anglais EGNOS Network Time). En supplément des premières stations NLES, le segment sol du système EGNOS comprend des stations de télémétrie et de contrôle d'intégrité RIMS (dénommées en anglais Ranging and Integrity Monitoring Stations) et un centre de contrôle de mission MCC (dénommé en anglais Mission Control Center).

Pour la mise en service du service SoL EGNOS bi-fréquences L1/L5, plusieurs sous-systèmes EGNOS sont en cours de mise à jour. Plus particulièrement, les signaux L1 et L5 seront générés par une nouvelle version de la première station NLES, dite de deuxième génération et dénommée par la suite NLES-G2. Le segment spatial fait l'objet également d'une mise à jour afin de permettre la réalisation du service SoL bi-fréquences L1/L5. Les satellites géostationnaires, Astra 4B et Astra 5B récemment lancés, embarquent chacun une charge utile bi-fréquences L1/L5 avec environ 50 MHz de bande disponible pour le signal E5. Il est prévu que le satellite Astra 4B remplacera le satellite Artemis actuellement en fin de vie.

Le signal L5 qui doit être utilisé dans la version prochaine L1/L5 d'EGNOS en supplément du signal L1 occupe sur une largeur d'environ 24 MHz la partie inférieure de la bande allouée au canal E5 des charges utiles Astra 4B et 5B.

La partie supérieure restante de la bande du canal E5 qui n'est pas utilisée par le système EGNOS bi-fréquences L1/L5 de seconde génération sera dénommée par la suite E5b, et offre la possibilité de transmettre de nouveaux services qui requièrent des données de corrections supplémentaires par rapport à celles diffusées par les signaux SoL.

Toutefois, la diffusion d'un nouveau signal SBAS qui partage une même charge utile EGNOS en activant le canal E5b de la charge utile ne sera possible que si cette activation n'entraîne aucun risque incontrôlé d'impact sur les performances d'un quelconque service critique EGNOS de niveau SoL, c'est-à-dire un service certifié par l'Organisation Internationale de l'Aviation Civile ICAO (dénommée en anglais International Civil Aviation Organization) en termes d'intégrité, de disponibilité, de continuité et de précision.

Dans le cas où l'envoi d'un nouveau signal SBAS, indépendant des signaux de niveau SoL existants et ne présentant aucun impact sur ces signaux SoL existants, est possible, le nouveau signal est qualifié de signal secondaire.

A l'instar de la génération de signaux L1/L5 de niveau critique SoL, l'article de H. Al Bitar et al., intitulé « Augmenting EGNOS with an E5b Channel », publié dans ION 2014, propose que la génération du signal secondaire E5b soit réalisée par une station sol de type NLES compte tenu que le signal E5b partagera la ou les mêmes charges utiles que celles relayant les signaux SoL EGNOS L1 et L5.

L'article de H. Al Bitar rappelle les fonctions principales mises en oeuvre par une station NLES dans le cas du traitement d'un signal SBAS de niveau SoL, à savoir :

.- générer le signal d'augmentation en utilisant des codes PRN de bruit pseudo-aléatoires (en anglais Pseudo-Random Noise) et des messages de données particulières ;

.- synchroniser le signal émis à la sortie du centre de phase de l'antenne d'émission du satellite GEO par rapport au temps absolu du système ENT ;

.- contrôler la cohérence de la phase du code par rapport à la phase de la porteuse au niveau du centre de phase de l'antenne d'émission.

Le même article propose deux architectures de stations NLES pour générer le signal secondaire E5b.

Suivant une première architecture, une unique station NLES est configurée pour générer un signal tri-fréquences L1/L5/E5b. Cette station NLES peut être par exemple une version augmentée de la première station bi-fréquences L1/L5 NLES-G2 de seconde génération.

Toutefois, la première architecture présente l'inconvénient majeur d'entraîner la conception d'un nouveau matériel et d'un nouveau logiciel, la mise en oeuvre longue et coûteuse d'une nouvelle procédure de qualification et de certification ICAO de la station NLES-G2 elle-même et d'autres sous-systèmes EGNOS impactés, l'écriture de la documentation correspondante et un niveau obligatoire d'implémentation logicielle DAL B/C. En outre dans cette première architecture, les signaux EGNOS L1/L5 de niveau sécuritaire SoL sont faiblement isolés par rapport au nouveau signal E5b, et les risques de couplage entre ces signaux sont trop nombreux, ce qui ne permet pas de considérer le signal E5b généré par une telle architecture comme un signal secondaire.

Suivant une deuxième architecture visant à remédier aux inconvénients décrits ci-dessus, une deuxième station NLES est configurée pour générer exclusivement le signal SBAS secondaire E5b en étant indépendante de la première station NLES-G2 classique, configurée et certifiée pour générer le signal bi-fréquences L1/L5 EGNOS de niveau sécuritaire SoL. La deuxième station NLES consiste en un calculateur de contrôle, suivi d'un générateur de signal E5b et d'un adaptateur radiofréquence à la bande RF de la voie montante. La deuxième station NLES est faiblement couplée à la première station NLES-G2 pour en recevoir des données de pilotage et des données de sortie de l'algorithme de boucle longue L1/L5, ainsi qu'un signal d'horloge de référence locale à 10 MHz, et un signal de génération d'une impulsion par seconde (1 PPS = 1 Pulse Per Second), dérivé du signal d'horloge locale.

Cette deuxième architecture, en plus d'éviter une nouvelle certification d'un contexte SoL, est plus simple à réaliser car elle n'utilise pas, ou très peu et de manière maîtrisée, d'équipements en relation avec les services L1/L5 de niveau SoL, et elle fournit une meilleure isolation entre les deux stations en cas de panne sur l'une d'entre elles.

Selon l'article précité, si cette architecture ne permet pas de générer des signaux L5 et E5b suffisamment cohérents entre eux et induit un nombre d'erreurs de synchronisation du signal E5b trop élevé pour fournir un service de télémétrie (de « ranging » selon la dénomination anglaise), cette deuxième architecture minimaliste de génération d'un signal SBAS secondaire convient cependant à la fourniture de services de dissémination de données présentant des exigences de continuité et de disponibilité classiques.

Or, des problèmes de continuité et de disponibilité des services de dissémination de données ont été observées sous la forme d'interruptions de service plus ou moins fréquentes.

Le problème technique est de déterminer une architecture d'une deuxième station sol de génération d'un signal SBAS secondaire, destiné à supporter des services de dissémination de données, qui soit indépendante des équipements déjà certifiés pour générer les signaux SBAS de niveau SoL, qui soit minimaliste en termes de nombre d'équipements utilisés, et qui garantisse une continuité et une disponibilité suffisantes pour des services secondaires de dissémination de données.

A cet effet, l'invention a pour objet une station NLES secondaire de génération d'un signal secondaire d'un système d'augmentation par satellite SBAS destiné à supporter des services de dissémination de données, comprenant une chaine d'émission du signal SBAS secondaire dans une bande radiofréquence RF de voie montante ayant un générateur du signal SBAS secondaire dans une bande SBAS secondaire et un premier port de sortie RF de voie montante ; et dépourvue d'équipements pouvant impacter la génération de signaux SBAS existants de niveau SoL par une première station NLES-G2 ; caractérisée en ce que la station NLES secondaire comprend une chaine de réception, configurée pour recevoir dans la bande SBAS secondaire en un deuxième port d'entrée RF de voie descendante un signal SBAS secondaire, issu de la chaîne d'émission et retransmis par un satellite SBAS associé, et contrôler la synchronisation et la cohérence du code par rapport à la porteuse du signal SBAS secondaire reçu au travers d'une boucle de correction de la phase de la porteuse et de la phase du code du signal SBAS secondaire du signal émis par la chaîne d'émission.

Suivant des modes particuliers de réalisation, la station sol comprend l'une ou plusieurs des caractéristiques suivantes :

.- la chaine de réception comprend un récepteur mono-fréquence ajusté pour recevoir sélectivement le signal SBAS secondaire dans la bande secondaire, ou un récepteur bi-fréquences ajusté pour recevoir sélectivement le signal SBAS secondaire dans la bande secondaire et un signal SBAS de niveau SoL dans la bande L5, large de 24 MHz et centrée sur la fréquence de 1176,45 MHz ;

.- la bande secondaire est la bande du canal E5b, large de 24 MHz et centrée sur la fréquence de 1207,14 MHz, ou la bande du canal E6, large de 24 MHz et centrée sur la fréquence de 1278,75 MHz ;

.- la chaine d'émission comporte un filtre de sortie, ajusté sélectivement sur une bande de largeur de 20 MHz centrée sur la fréquence centrale d'un canal RF de voie montante correspondant à une fréquence de transposition près au canal du signal SBAS secondaire, généré par la chaîne d'émission ;

.- la chaine de réception comprend un récepteur mono-fréquence ajusté pour recevoir sélectivement le signal SBAS secondaire dans la bande secondaire; et la station NLES secondaire comprend en outre un troisième port d'interface, configuré pour recevoir des données de pilotage, des données de sortie élaborées par un algorithme de boucle longue en provenance d'une première station NLES-G2 de transmission d'un signal bi-fréquences L1/L5 de niveau de sécurité SoL dans les bandes L1 et L5, la bande L1 étant large de 24 MHz et centrée sur la fréquence de 1575,42 MHz ; un quatrième port d'interface, configuré pour recevoir un signal d'horloge émis par une horloge de référence locale de la première station NLES-G2 ; et un cinquième port d'interface, configuré pour recevoir un signal d'impulsion dérivé du signal d'horloge et répété périodiquement à une fréquence plus basse que celle de l'horloge ;

.- au moins le troisième port d'interface est protégé par un pare-feu, de préférence les troisième, quatrième et cinquième ports étant chacun protégés par un pare-feu de manière à assurer une liaison unidirectionnelle entrante dans la station NLES secondaire ;

.- la chaine de réception comporte un calculateur électronique de contrôle, connecté au récepteur mono-fréquence, et le calculateur de contrôle est configuré pour déterminer une première commande de phase corrigée du code et une deuxième commande de phase corrigée de la porteuse à appliquer au signal SBAS secondaire généré par la chaîne d'émission, la première commande de phase corrigée du code étant déterminée à partir d'un premier retard englobant l'effet de la distance géométrique séparant une antenne de réception du satellite SBAS et une antenne d'émission sol, partagée en commun par la station NLES secondaire et la première station NLES-G2, et l'effet du retard de propagation troposphérique du signal L5; d'un deuxième retard de propagation ionosphérique du canal de la voie montante correspondant à une transposition en voie montante du signal L5 ; d'un troisième retard représentatif de l'effet Sagnac en voie montante du signal L5 ; d'un quatrième retard et d'un cinquième retard, représentatifs respectivement des temps de transit du signal SBAS secondaire au sein de la charge utile du satellite et des équipements de voie montante de la station NLES secondaire ; et d'un écart temporel de pilotage de la première station NLES-G2 de génération du signal bi-fréquence L1/L5 égal à la différence temporel entre le temps local de la première station NLES-G2 et le temps du réseau SBAS ENT ; et la deuxième commande de phase corrigée de la porteuse étant déterminée à partir de la première commande de phase corrigée du code du signal SBAS secondaire généré, du deuxième retard de propagation ionosphérique du canal de la voie montante correspondant à une transposition du signal L5 sur la voie montante, et de la somme d'un premier décalage de phase, causé par la charge utile du satellite SBAS associé, et d'un deuxième décalage de phase, causé par des équipements de voie montante de la station NLES secondaire sur la transmission du signal SBAS secondaire ; les premier, deuxième, troisième retards en tant que données de sortie de l'algorithme de boucle longue L1/L5 de la station NLES-G2, et l'écart temporel de pilotage de la station sol NLES-G2 en tant que commande de pilotage sont délivrés par le troisième port d'interface ; et le calculateur de contrôle est configuré pour estimer la somme des premier et deuxième décalages de phase du signal SBAS secondaire à partir d'un première mesure de phase actuelle du code et d'une deuxième mesure de phase actuelle de la porteuse du signal SBAS secondaire fournies par le récepteur mono-fréquence, de la première commande de phase actuelle du code et de la deuxième commande de phase de la porteuse actuellement appliquées au signal SBAS secondaire, et du deuxième retard ionosphérique ;

.- la première commande de phase corrigée du code du signal SBAS secondaire émis est égale à moins la différence entre un premier terme égal à la somme du premier retard, du deuxième retard multiplié par le carré du rapport de la porteuse du signal L5 sur la porteuse du signal SBAS secondaire, du troisième retard, du quatrième retard, du cinquième retard, et d'un deuxième terme égal à l'écart temporel de pilotage de la première station NLES-G2 de génération du signal L5; et la deuxième commande de phase corrigée de la porteuse du signal SBAS secondaire est égale à la différence entre la première commande de phase corrigée du code du signal SBAS secondaire, et la différence entre la somme des premier et deuxième décalages de phase du signal SBAS secondaire estimés à partir des première et deuxième mesures de phase actuelles du code et de la porteuse du signal SBAS secondaire fournies par le récepteur mono-fréquence, et le double du deuxième retard ionosphérique multiplié par le carré du rapport de la porteuse du signal L5 sur la porteuse de voie montante du signal SBAS secondaire ;

.- la chaine de réception comprend un récepteur bi-fréquences, ajusté pour recevoir sélectivement le signal SBAS secondaire dans la bande secondaire et un signal SBAS dans la bande L5, large de 24 MHz et centrée sur la fréquence de 1176,45 MHz, la station NLES secondaire comprenant une horloge de référence locale, et une unité de génération d'un signal d'impulsion, dérivé du signal d'horloge et répété périodiquement à une fréquence plus basse que celle de l'horloge, et la station NLES secondaire est dépourvue de ports d'interface permettant d'émettre un signal quelconque pouvant perturber la génération des signaux SoL L1 et L2 par une première station NLES-G2 ;

.- la chaine de réception comprend un récepteur bi-fréquences, ajusté pour recevoir sélectivement le signal SBAS secondaire dans la bande secondaire et un signal SBAS de niveau SoL émis par une première station NLES-G2 dans la bande L5, large de 24 MHz et centrée sur la fréquence de 1176,45 MHz, la station SBAS secondaire comprenant en outre: un quatrième port d'interface, configuré pour recevoir un signal d'horloge émis par une horloge de référence locale d'une première station NLES-G2 de transmission d'un signal bi-fréquence L1/L5 de niveau SoL dans les bandes L1 et L5, la bande L1 étant large de 24 MHz et centrée sur la fréquence de 1575,42 MHz ; et un cinquième port d'interface, configuré pour recevoir un signal d'impulsion dérivé du signal d'horloge et répété périodiquement à une fréquence plus basse que celle de l'horloge, et la station sol secondaire étant dépourvue d'un troisième port d'interface, configuré pour recevoir des données de pilotage ou des données de sortie élaborées par un algorithme de boucle longue d'un signal bi-fréquence L1/L5 en provenance de la première station NLES-G2 ;

.- les quatrième et cinquième ports sont chacun protégés par un pare-feu de manière à assurer une liaison unidirectionnelle différente et entrante sur chacun des ports d'interface ;

.- la chaîne de réception comporte un calculateur électronique de contrôle, connecté au récepteur bi-fréquences, et le calculateur électronique de contrôle est configuré pour déterminer une première commande de phase corrigée du code et une deuxième commande de phase corrigée de la porteuse à appliquer au signal SBAS secondaire généré par la chaîne d'émission, la première commande de phase corrigée du code étant déterminée à partir : d'un premier retard englobant l'effet de la distance géométrique séparant l'antenne de réception du satellite SBAS et l'antenne d'émission sol du signal SBAS secondaire partagée en commun par la station NLES secondaire et la première station NLES-G2, et l'effet du retard de propagation troposphérique sur le signal SBAS secondaire ; d'un deuxième retard de propagation ionosphérique du canal SBAS secondaire ; d'un troisième retard représentatif de l'effet Sagnac en voie montante du signal SBAS secondaire; d'un quatrième retard et d'un cinquième retard représentatifs respectivement des temps de transit du signal SBAS secondaire au sein de la charge utile et des équipements de voie montante de la station sol secondaire ; et d'un écart temporel de pilotage de la station NLES secondaire de génération du signal SBAS secondaire égal à la différence temporelle entre le temps local de la station SBAS secondaire et le temps du réseau SBAS ENT ; et la deuxième commande de phase corrigée de la porteuse du signal SBAS secondaire est déterminée à partir : de la première commande de phase corrigée du code du signal SBAS secondaire généré ; du deuxième retard de propagation ionosphérique du signal SBAS secondaire ; et de la somme d'un premier décalage de phase causé par la charge utile du satellite SBAS et d'un deuxième décalage de phase causé par des équipements de voie montante de la station sol secondaire sur la transmission du signal SBAS secondaire ; et le calculateur électronique de contrôle est configuré pour estimer les premier et deuxième retards, ainsi que l'écart temporel de pilotage de la station NLES secondaire de génération du signal SBAS secondaire et la somme des premier et deuxième décalages de phase du signal SBAS secondaire à partir : de première et deuxième mesures de phase actuelle du code et de la porteuse du signal SBAS secondaire reçu par le récepteur bi-fréquence ; et de la première commande de phase actuelle du code et de la deuxième commande de phase actuelle de la porteuse appliquées au signal SBAS générés ; et des quatrième et des cinquième retards ; et d'un sixième retard et d'un septième retard, représentatifs respectivement des temps de transit du signal SBAS secondaire et L5 au sein des équipements de voie descendante de la station sol SBAS ; et d'un huitième retard LA, représentatif d'un effet de bras de levier, défini comme la différence entre la distance séparant les antennes de voie montante depuis l'antenne d'émission partagée par la station SBAS secondaire vers l'antenne de réception partagée du satellite et la distance séparant les antennes de voie descendante depuis l'antenne d'émission partagée du satellite vers l'antenne de réception partagée de la station sol SBAS ; les quatrième, cinquième, sixième, et septième retards sont prédéterminés ; et le troisième retard est calculé par le calculateur séparément de l'estimation ;

.- la première commande de phase corrigée du code du signal SBAS secondaire généré est égale à moins la différence entre un premier terme égal à la somme du premier retard, du deuxième retard, du troisième retard, du quatrième retard et du cinquième retard, et un deuxième terme égal à l'écart temporel de pilotage de la station NLES secondaire ; et la deuxième commande de phase corrigée de la porteuse du signal SBAS secondaire est égale à la différence entre la première commande de phase corrigée du code du signal SBAS secondaire, et la différence entre la somme estimée des premier et deuxième décalages de phase du signal SBAS secondaire et le double du deuxième retard ionosphérique multiplié par le carré du rapport de la porteuse du signal SBAS secondaire de voie descendante sur la porteuse de voie montante du signal SBAS secondaire ;

.- la bande RF de voie montante du signal SBAS secondaire est comprise dans l'ensemble des bandes C et Ku.

L'invention a également pout objet un procédé de génération par une station NLES secondaire d'un signal SBAS secondaire, destiné à supporter des services de dissémination de données de navigation, la station NLES secondaire étant dépourvue d'équipements pouvant impacter la génération de signaux SBAS existants de niveau de sécurité SoL par une première station NLES-G2, comprenant une chaine d'émission mono-fréquence du signal SBAS secondaire dans une bande RF de voie montante, la chaîne d'émission incluant elle-même un générateur du signal SBAS secondaire dans une bande secondaire identique à la bande de voie descendante du signal SBAS secondaire,

caractérisé en ce que le procédé de génération comprend les étapes consistant à :

.- dans une première étape d'initialisation, une première commande de phase actuelle du code et une deuxième commande de phase actuelle de la porteuse d'un signal SBAS secondaire sont mises respectivement à une première valeur initiale et une deuxième valeur initiale ; puis

.- dans une deuxième étape, des données de dissémination de services, la première commande de phase actuelle du code et la deuxième commande de phase actuelle de la porteuse du signal SBAS secondaire au générateur du signal SBAS secondaire; puis

.- dans une troisième étape, le signal SBAS secondaire est généré par le générateur de signal secondaire à partir des données de dissémination de services de navigation, de la première commande de phase actuelle du code et de la deuxième commande de phase actuelle de la porteuse dans une bande secondaire de voie descendante ; puis

.- dans une quatrième étape, un récepteur d'une chaîne de réception de la station NLES secondaire reçoit le signal SBAS secondaire dans la bande secondaire de voie descendante et réalise une première mesure de phase actuelle du code et une deuxième mesure de phase actuelle de la porteuse du signal SBAS secondaire ;

.- puis dans une cinquième étape, un calculateur de contrôle détermine une première commande de phase corrigée du code et une deuxième commande de phase corrigée de la porteuse à appliquer au signal secondaire généré à partir au moins de la première commande de phase actuelle du code, de la deuxième commande de phase actuelle de la porteuse, de la première mesure de la phase du code et de la deuxième mesure de la phase de la porteuse du signal SBAS secondaire ; puis

. - dans une sixième étape de rebouclage, la première commande de phase actuelle du code et la deuxième commande de phase actuelle de la porteuse sont mis respectivement à la première commande de phase corrigée du code et à la deuxième commande de phase corrigée de la porteuse du signal SBAS secondaire généré ; puis

.- les deuxième, troisième, quatrième, cinquième, sixième étapes sont répétées successivement jusqu'à ce qu'une décision d'arrêt du procédé intervienne.

Suivant des modes particuliers de réalisation, le procédé comprend l'une ou plusieurs des caractéristiques suivantes :

.- le récepteur de la chaine de réception est un récepteur mono-fréquence ajusté pour recevoir sélectivement le signal SBAS secondaire dans la bande secondaire, et le procédé comprend :

.* une septième étape supplémentaire, disposée immédiatement avant ou après la quatrième étape, dans laquelle le calculateur de contrôle reçoit au travers d'un troisième interface de la station NLES secondaire des données de pilotage concernant une première station NLES-G2, et des données de sortie élaborées par un algorithme de boucle longue d'un signal SoL de la même première station NLES-G2; et

.* une huitième étape remplaçant la cinquième étape dans laquelle le calculateur de contrôle détermine une première commande de phase corrigée du code et une deuxième commande de phase corrigée de la porteuse à appliquer au signal secondaire généré, la première commande de phase corrigée du code étant fonction des données de pilotage et des données de sortie de l'algorithme de boucle longue du signal L5 fournies par la première station NLES-G2, et la deuxième commande de phase corrigée de la porteuse étant fonction de la première commande de phase actuelle du code, de la deuxième commande de phase actuelle de la porteuse du signal SBAS secondaire, de la première mesure actuelle de la phase du code et de la deuxième mesure actuelle de la phase de la porteuse du signal SBAS secondaire et de données de sortie de l'algorithme de boucle longue du signal L5 ;

et les deuxième, troisième, quatrième, septième, huitième, sixième étapes sont répétées successivement jusqu'à ce qu'une décision d'arrêt du procédé intervienne ;

.- le récepteur de la chaine de réception est un récepteur bi-fréquences, ajusté pour recevoir sélectivement le signal SBAS secondaire dans la bande secondaire et le signal L5 émis par la première station NLES-G2 et retransmis par le même satellite; et le procédé comprend :

.* une neuvième étape supplémentaire disposée immédiatement avant ou après ou en parallèle de la quatrième étape, dans laquelle le récepteur bi-fréquences reçoit le signal L5 dans la bande secondaire L5 de voie descendante et réalise une première mesure de phase actuelle du code et une deuxième mesure de phase actuelle de la porteuse du signal L5. ; et

.* une dixième étape remplaçant la cinquième étape dans laquelle le calculateur de contrôle détermine une première commande de phase corrigée du code et une deuxième commande de phase corrigée de la porteuse à appliquer au signal secondaire généré,

la première commande de phase corrigée du code du signal SBAS secondaire généré étant fonction de la première commande de phase actuelle du code et de la deuxième commande de phase actuelle de la porteuse du signal SBAS secondaire, de la première mesure de phase actuelle du code et de la deuxième mesure de phase actuelle de la porteuse du signal SBAS secondaire, de la première mesure de phase actuelle du code et de la deuxième mesure de phase actuelle de la porteuse du signal L1 émis par la première station NLES-G2, et
la deuxième commande de phase corrigée de la porteuse du signal SBAS secondaire généré étant fonction de la première commande de phase actuelle du code et de la deuxième commande de phase actuelle de la porteuse du signal SBAS secondaire, de la première mesure de phase actuelle du code et de la deuxième mesure de phase actuelle de la porteuse du signal SBAS secondaire, de la première mesure de phase actuelle du code et de la deuxième mesure de phase actuelle de la porteuse du signal L1 émis par la première station NLES-G2 ; et
les deuxième, troisième, quatrième, septième, huitième, sixième étapes sont répétées successivement jusqu'à ce qu'une décision d'arrêt du procédé intervienne.

L'invention a également pout objet un produit ou programme d'ordinateur comprenant un ensemble d'instructions configurées pour mettre en oeuvre une ou plusieurs des étapes du procédé défini ci-dessus lorsqu'elles sont chargées dans et exécutées par le calculateur de contrôle de la station NLES secondaire telle que définie ci-dessus.
L'invention sera mieux comprise à la lecture de la description de plusieurs formes de réalisation qui va suivre, donnée uniquement à titre d'exemple et faite en se référant aux dessins sur lesquels :

- la Figure 1 est une vue d'une architecture générale d'un système SBAS de fourniture d'un service SBAS bi-fréquences L1/L5 de niveau critique SoL et d'un service SBAS secondaire mono-fréquence selon l'invention ;
- la Figure 2 est une vue d'un premier mode de réalisation de l'architecture d'une deuxième station NLES selon l'invention configurée pour générer un signal SBAS secondaire en étant intégrée dans le système de la Figure 1 ;
- la Figure 3 est une vue d'un deuxième mode de réalisation de l'architecture d'une deuxième station NLES selon l'invention configurée pour générer un signal SBAS secondaire en étant intégrée dans le système de la Figure 1 ;
- la Figure 4 est une vue d'un troisième mode de réalisation de l'architecture d'une deuxième station NLES selon l'invention, configurée pour générer un signal SBAS secondaire en étant intégrée dans le système de la Figure 1 ;
- la Figure 5 est un ordinogramme général d'un procédé selon l'invention de génération d'un signal SBAS secondaire ;
- la Figure 6 est un ordinogramme d'un premier mode de réalisation du procédé de génération de la Figure 5 lorsque l'architecture de la deuxième station NLES est l'architecture du premier mode de réalisation de la deuxième station NLES décrit dans la Figure 2 ;
- la Figure 7 est un ordinogramme d'un deuxième mode de réalisation du procédé de génération de la Figure 5 lorsque l'architecture de la deuxième station NLES est l'architecture du deuxième ou du troisième mode de réalisation de la deuxième station NLES décrit dans la Figure 3 ou la Figure 4.

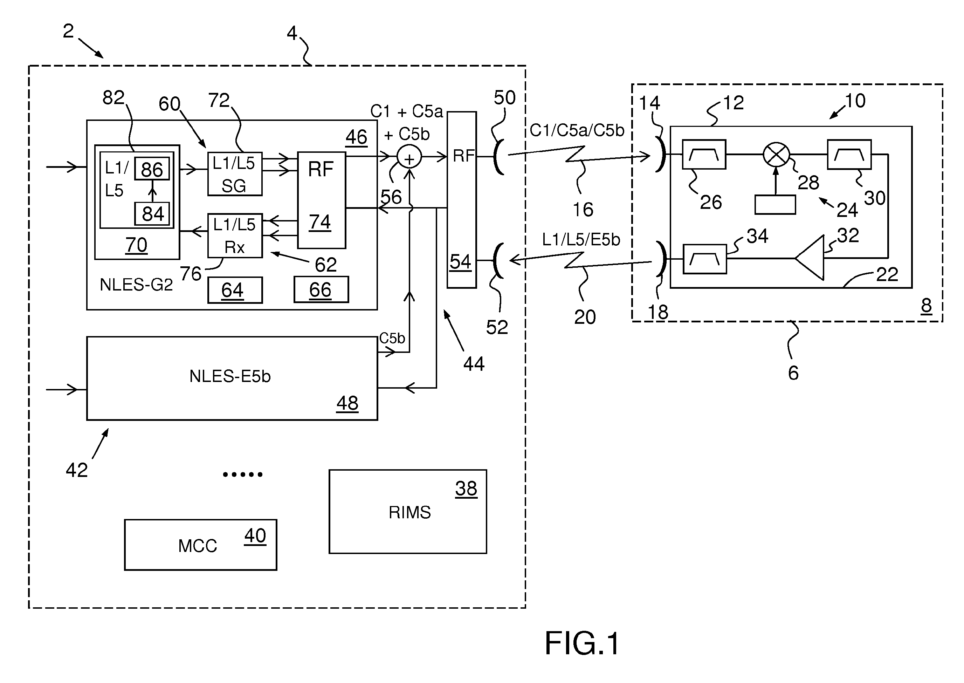

Suivant la Figure 1, un système 2 SBAS d'augmentation par satellites, ici un système de type EGNOS, comprend un segment sol 4, représenté ici seulement dans sa composante infrastructure en omettant la composante des terminaux utilisateurs, et un segment spatial 6.
Le segment spatial 6 est un ensemble 8 d'au moins un satellite, ici placés en orbite géostationnaire suivant des positions orbitales différentes, un seul satellite 10 étant représenté sur la Figure 1 par souci de simplification.
Le satellite 10 comporte une charge utile 12 transparente ayant une antenne de réception 14 d'une voie montante 16, une antenne d'émission 18 de voie descendante 20, et un répéteur transparent 22, interconnecté et entre l'antenne de réception 14 et l'antenne d'émission 18.
L'antenne de réception 14 est configurée pour recevoir dans une même bande de voie montante, par exemple la bande C, un signal tri-fréquences C1/C5a/C5b, ou un ensemble de trois signaux différents, émis chacun dans un canal différent C1, C5a, C5b et correspondant respectivement aux signaux L1, L5 et E5b de la voie descendante 20 avec la transposition en fréquence qui convient.
Les canaux L1, L5 et E5b ont respectivement une fréquence centrale égale à 1575,42 MHz, 1176,45 MHz et 1207,14 MHz, et ont chacun une largeur de bande égale à 24 MHz.
Les transpositions des canaux L1, L5, E5b en les canaux C1, C5a, C5b de voie montante peuvent utiliser des fréquences de transposition différentes en fonction du plan de fréquences choisi. En variante, une unique fréquence de transposition peut être choisie, ce qui simplifiera le générateur des fréquences de référence servant aux transpositions à bord du satellite.
Suivant la Figure 1 et un schéma simplifié, une chaine de transmission 24 d'un canal de transmission du répéteur transparent 22 comprend un filtre passe-bande 26 filtrant l'ensemble des bandes C1, C5a, C5b, suivi d'une chaîne de transposition vers une fréquence inférieure avec filtrage étroit de l'un des canaux et amplification, schématisée par la mise en cascade d'un multiplexeur 28, d'un filtre passe-bande de canal 30 à réjection élevée, et d'un amplificateur 32 dans la bande du canal de voie descendante. La chaine de transmission 24 comporte également un filtre de sortie 34 qui suit la chaîne de transposition.

Le segment sol 4 comprend classiquement un ensemble de stations de télémétrie (de ranging selon la dénomination anglaise) et de contrôle d'intégrité RIMS 38 et un centre de contrôle de mission MCC 40.

Le segment sol 4 comprend également un ensemble 42 d'au moins une paire de stations NLES, une seule paire 44 de stations appariées étant représentée sur la Figure 1 par souci de simplification.

La paire 44 de stations NLES comporte une première station NLES-G2 46 pour générer un signal bi-fréquences L1/L5 de niveau sécuritaire SoL et une deuxième station NLES 48 secondaire pour générer un signal mono-fréquence secondaire, ici en bande E5b.

Les première et deuxième stations NLES 46, 48 partagent une même antenne sol d'émission 50, configurée pour émettre un signal tri-fréquences C1/C5a/C5b de voie montante vers le satellite 10 associé et en visibilité, et une même antenne sol de réception 52, configurée pour recevoir un signal tri-fréquences L1/L5/E5b de voie descendante en provenance du satellite 10.

Les antennes sol d'émission et de réception 50, 52 sont montées sur un même site radiofréquence RF 54 et en amont de ce site RF 54, le signal tri-fréquences émis C1/C5a/C5b résulte du multiplexage par un multiplexeur de sortie RF 56 d'un signal bi-fréquences C1/C5a de voie montante émis par la première station NLES-G2 46 et d'un signal C5b de voie montante par la deuxième station NLES-E5b secondaire 48.

Le signal tri-fréquences de voie descendante L1/L5/E5b reçu est divisé en un premier signal RF et un deuxième signal RF identiques, acheminés respectivement à la première station NLES-G2 46 et à la deuxième station NLES-E5b 48.

La première station NLES-G2 46 comporte de manière classique une chaîne d'émission 60, une chaîne de réception 62, une horloge de référence locale 64 à 10 MHz, partagée par les chaines d'émission et de réception 60, 62, et un générateur 66 d'une impulsion répétée chaque seconde synchrone de l'horloge de référence 64.

La chaîne d'émission 60 comporte un calculateur de contrôle 70, un générateur 72 du signal bi-fréquences L1/L5 correspondant au signal bi-fréquences C1/C5a de voie montante et une unité d'adaptation RF 74, configurée pour transposer les signaux L1 et L5 générés par le générateur 72 des signaux L1 et L5 en les signaux RF de voie montante C1 et C5a.

La chaîne de réception 62 comporte l'unité d'adaptation RF 74, un récepteur bi-fréquences 76 du signal bi-fréquences L1/L5 de voie descendante, et le calculateur de contrôle 70 pour traiter le signal bi-fréquence L1/L5 de voie descendante reçu par le récepteur bi-fréquences L1/L5.

Le calculateur de contrôle 70, partagé par la chaîne d'émission 60 et la chaine de réception 62, est configuré pour synchroniser les signaux SoL L1 et L5 générés sur le Temps du Réseau EGNOS ENT et maintenir la cohérence de phase entre le code et la porteuse du signal L1 d'une part, et la cohérence de phase entre le code et la porteuse du signal L5 d'autre part.

A cette fin, le calculateur de contrôle 70 exécute un algorithme LLA dit de boucle longue (en anglais Long Loop Algorithm) implémenté dans un module informatique 82 faisant intervenir un filtre de Kalman 84 et un algorithme de contrôle 86.

Les composants et les logiciels constituant la première station NLES-G2 46 confèrent aux signaux L1 et L5 générés un niveau de sécurité SoL par leur conception et leur certification ICAO.

En variante, le canal E5b est remplacé par un canal E6 de même largeur et ayant une fréquence centrale égale à 1278,75 MHz.

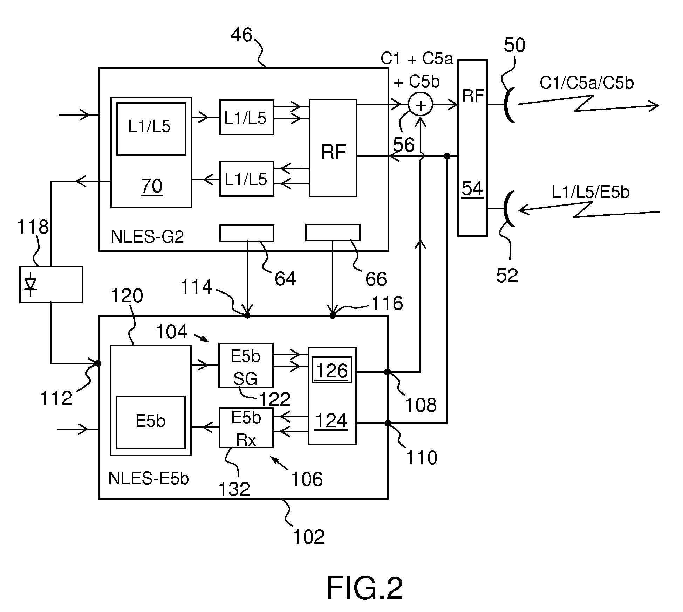

Suivant la Figure 2 et un premier mode de réalisation 102 de la deuxième station NLES secondaire 48 pour générer et émettre en voie montante un signal SBAS secondaire, la deuxième station NLES secondaire 102 comprend une chaine d'émission 104 du signal SBAS secondaire dans une bande RF de voie montante, ici la bande C, une chaine de réception 106, un premier port de sortie RF 108 de voie montante, un deuxième port d'entrée RF 110 de voie descendante, un troisième port d'interface 112, un quatrième port d'interface 114 et un cinquième port d'interface 116.

La deuxième station NLES secondaire 102 est dépourvue d'équipements pouvant impacter la génération de signaux SBAS existants de niveau sécuritaire SoL, c'est-à-dire les signaux L1 et L5.

Le premier port de sortie RF 108 de voie montante, connecté au multiplexeur RF de sortie 56, est configuré pour délivrer le signal de voie montante C5b correspondant au signal SBAS secondaire E5b de voie descendante.

Le deuxième port d'entrée RF 110 de voie descendante, connecté l'antenne sol de réception 52, est configuré pour recevoir le signal tri-fréquences L1/L5/E5b de voie descendante.

Le troisième port d'interface 112 est configuré pour recevoir des données de pilotage et des données de sortie, élaborées par un algorithme de boucle longue, en provenance de la première station NLES-G2 46 de transmission du signal bi-fréquences L1/L5 de niveau SoL dans les bandes L1 et L5.

Ici, le troisième port d'interface 112 est protégé par un pare-feu 118 de manière à assurer une liaison unidirectionnelle depuis la première station NLES-G2 46 vers la deuxième station NLES secondaire 102 et empêcher ainsi une remontée d'un signal perturbateur au sein de la première station NLES-G2 46.

En variante, les troisième, quatrième et cinquième ports d'interface 112, 114, 116 sont protégés chacun par un pare-feu

Le quatrième port d'interface 114 est configuré pour recevoir le signal d'horloge émis par l'horloge de référence locale de la première station NLES-G2 46.

Le cinquième port d'interface 116 est configuré pour recevoir le signal d'impulsion dérivé du signal d'horloge et répété périodiquement à une fréquence plus basse que celle de l'horloge, ici 1 Hz.

La chaine d'émission 104 du signal SBAS secondaire est configurée pour fournir des services de dissémination de données de navigation au travers du signal SBAS secondaire émis.

La chaine d'émission 104 du signal SBAS secondaire comporte un calculateur de contrôle 120, un générateur 122 du signal SBAS secondaire mono-fréquence dans la bande secondaire, ici la bande E5b, et correspondant au signal mono-fréquence C5b de voie montante, et comporte une unité d'adaptation RF 124, configurée pour transposer le signal Eb5 secondaire généré par le générateur 122 en le signal RF de voie montante C5b.

L'unité d'adaptation RF 124 comprend en outre un filtre sortie 126, ajusté sélectivement sur une bande de largeur de 20 MHz autour de la fréquence centrale du canal C5b, afin d'éviter la transmission vers le satellite 10 de signaux perturbateurs dans les canaux C1 et C5a.

La chaîne de réception 106 est configurée pour recevoir dans la bande SBAS secondaire en le deuxième port d'entrée RF 110 de voie descendante un signal SBAS secondaire issu de la chaîne d'émission 104 et retransmis par le satellite, et contrôler la synchronisation et la cohérence du code par rapport à la porteuse du signal SBAS secondaire reçu au travers d'une boucle de correction de la phase de la porteuse et de la phase du code du signal SBAS secondaire du signal émis par la première chaîne d'émission 104.

La chaîne de réception 106 comporte l'unité d'adaptation RF 124, un récepteur mono-fréquence 132 du signal secondaire mono-fréquence E5b de voie descendante, et le calculateur de contrôle 120 pour traiter le signal mono-fréquence E5b de voie descendante reçu par le récepteur mono-fréquence 132 du signal de voie descendante E5b.

Le calculateur de contrôle 120, partagé par la chaîne d'émission 104 et la chaine de réception 106, est configuré pour synchroniser sur le Temps du Réseau EGNOS ENT le signal SBAS secondaire généré, et maintenir la cohérence de phase entre le code et la porteuse du signal E5b.

Le calculateur électronique de contrôle 120 est configuré pour calculer les commandes de phase respectives à appliquer à la phase courante du code et à la phase courante de la porteuse du signal SBAS secondaire du signal émis par la première chaîne d'émission 104.

Le calculateur de contrôle 120 est configuré pour déterminer et appliquer une première commande de phase corrigée du code du signal SBAS secondaire E5b, désignée par $RC_{E5b}$ et générée à partir :

.- d'un premier retard, désigné par $SR_{L5} + tropo_{L5}$, englobant l'effet de la distance géométrique séparant l'antenne de réception du satellite SBAS et l'antenne d'émission partagée en commun par la deuxième station NLES et la première station L1/L5 NLES-G2, et l'effet du retard de propagation troposphérique du canal C5a,

.- d'un deuxième retard de propagation ionosphérique du canal de la voie montante correspondant à une transposition du signal L5 sur la voie montante, désigné par $iono_{C5a}$,

.- d'un troisième retard par la première station NLES-G2, représentatif de l'effet Sagnac en voie montante du signal L5 et désigné par $SagnacUp_{L5}$ ;

.- d'un quatrième retard et d'un cinquième retard, représentatifs respectivement des temps de transit du signal SBAS secondaire au sein de la charge utile et des équipements de voie montante de la station sol secondaire correspondant au signal E5b, et désignés respectivement par $HW_{PL_{E5b}}$ et $HWN_{LES_{E5bup}}$ ;

.- d'un écart temporel de pilotage de la station sol NLES-G2 de génération du signal L5, égal à la différence temporelle entre le temps local de la première station NLES-G2 et le temps du réseau SBAS ENT et désigné par $SO_{NLES_{L5}}$.

Le calculateur de contrôle 120 est configuré pour déterminer et appliquer une deuxième commande de phase corrigée de la porteuse du signal SBAS secondaire généré à partir :

.- de la première commande de phase corrigée $RC_{E5b}$ du code du signal SBAS secondaire E5b généré;

.- du deuxième retard de propagation ionosphérique $iono_{C5a}$ du canal de la voie montante correspondant à une transposition du signal L5 sur la voie montante, et

.- la somme $\varphi_{PPL_{E5b}} + \varphi_{NLES_{E5bup}}$ d'un premier décalage de phase $\varphi_{PL_{E5b}}$ causé par la charge utile du satellite SBAS et d'un deuxième décalage de phase $\varphi_{NLES_{E5b}}$ causé par des équipements de voie montante de la station sol secondaire 102 sur la transmission du signal SBAS secondaire E5b.

Les premier, deuxième, troisième retards en tant que données de sortie de l'algorithme de boucle longue L1/L5 de la première station NLES-G2 46, et l'écart temporel de pilotage de la station sol NLES-G2 en tant que commande de pilotage sont délivrés par le calculateur de contrôle 70 de la première station NLRES-G2 46 au troisième port d'interface 112 de la deuxième station NLES secondaire 102.

Le calculateur de contrôle 120 de la deuxième station NLES secondaire 102 est configuré pour estimer la somme $\varphi_{PL_{E5b}}$

+ $\varphi_{NLES_{E5bup}}$ des premier et deuxième décalages de phase du signal SBAS secondaire à partir des mesures de phase actuelles du code et de la porteuse du signal SBAS secondaire, désignées respectivement par $PR_{E5b}$ et $ADR_{E5b}$ et fournies par le récepteur mono-fréquence 132, de la première commande de phase actuelle du code et de la deuxième commande de phase actuelle de la porteuse, appliquées au signal SBAS secondaire généré et désignés respectivement par $RCactuel_{Esb}$, et $PCactuel_{E5b}$, et le deuxième retard iono$_{C5a}$.

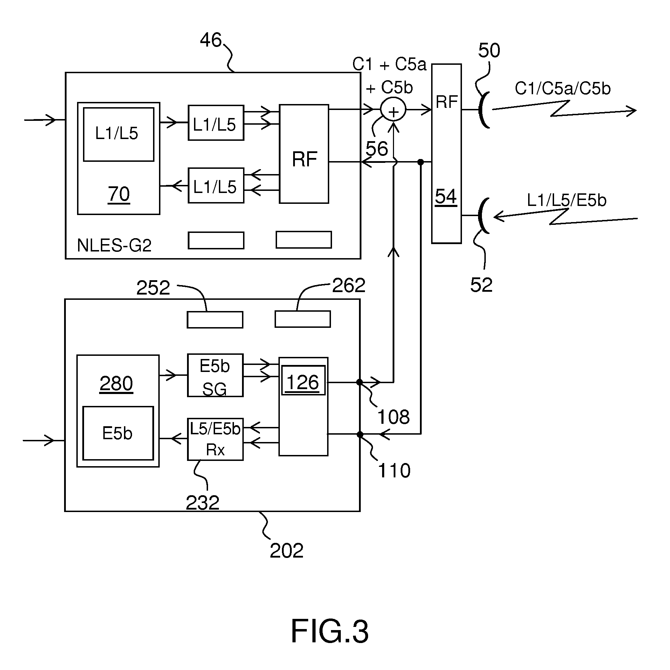

Suivant la Figure 3 et un deuxième mode de réalisation 202 de la deuxième station NLES 48 pour générer et émettre en voie montante un signal SBAS secondaire, l'architecture de la deuxième station NLES 202 est dérivée de l'architecture de la deuxième station NLES 102.

La deuxième station NLES 202 secondaire diffère de la deuxième station NLES 102 de la Figure 2 en ce que :

.- le récepteur mono-fréquence 132 du signal SBAS secondaire mono-fréquence E5b de la chaine de réception 106 est remplacé par un récepteur bi-fréquences 232, ajusté pour recevoir sélectivement le signal SBAS secondaire de voie descendante dans la bande secondaire, ici la bande E5b, et le signal L5 de niveau SoL, émis par la première station NLES-G2 46 et retransmis par le satellite 10; et

.- la deuxième station NLES 202 est dépourvue des troisième, quatrième et cinquième ports d'interface 112, 114, 116 et des liaisons correspondantes avec la première station NLES-G2 ;

.- la deuxième station NLES 202 comporte une horloge de référence locale 252 à 10 MHz, et une unité de génération d'un signal d'impulsion 262, dérivé du signal d'horloge et répété périodiquement à une fréquence plus basse que celle de l'horloge, ici 1 Hz ; et

.- le calculateur de contrôle 120 est remplacé par un calculateur électronique 280 d'architecture matérielle identique, mais est configuré pour des traitements différents qui prennent en compte l'absence de données de pilotage et de données de LLA concernant le signal L5, délivrées par la première station NLES-G2 46, et qui se fondent sur des mesures de phase actuelles du code et de la porteuse du signal SBAS secondaire E5b reçu, d'une part, et sur des mesures de phase actuelles du code et de la porteuse du signal L5, d'autre part.

Le calculateur de contrôle 280, partagé par les chaîne d'émission et de réception, est configuré pour synchroniser sur le Temps du Réseau EGNOS ENT le signal SBAS secondaire généré E5b, et maintenir la cohérence de phase entre le code et la porteuse du signal E5b.

Le calculateur électronique de contrôle 280 est configuré pour calculer les commandes de phase corrigées respectives à appliquer à la phase du code et à la phase de la porteuse du signal SBAS secondaire généré par le générateur de signal SBAS secondaire de la première chaîne d'émission.

Le calculateur de contrôle 280 est configuré pour déterminer et appliquer une première commande de phase corrigée du code du signal SBAS secondaire E5b, désignée par $RC_{E5b}$ et générée à partir :

.- d'un premier retard, désigné par $SR_{E5b} + tropo_{E5b}$, englobant l'effet de la distance géométrique séparant l'antenne de réception du satellite SBAS et l'antenne d'émission partagée en commun par la deuxième station NLES secondaire 202 et la première station L1/L5 NLES-G2 46, et l'effet du retard de propagation troposphérique du canal C5b,

.- d'un deuxième retard de propagation ionosphérique du signal secondaire E5b, désigné par iono$_{E5b}$ et lié au retard de propagation ionosphérique iono$_{C5b}$ du canal C5b par la relation iono$_{C5b}$ = iono$_{E5b} \times \left( \dfrac{Fcarrier_{E5b\_nominal}}{Fcarrier_{C5b\_nominal}} \right)^2$, dans laquelle $Fcarrier_{E5b_{nominal}}$ désigne la fréquence centrale du signal secondaire E5b de voie descendante et $Fcarrier_{C5b_{nominal}}$ désigne la fréquence centrale du signal de voie montante C5b correspondant au signal secondaire E5b généré par la deuxième station NLES-E5b 202;

.- d'un troisième retard, représentatif de l'effet Sagnac en voie montante du signal E5b et désigné par $SagnacUp_{E5b}$ ;

.- d'un quatrième retard et d'un cinquième retard, représentatifs respectivement des temps de transit du signal SBAS secondaire au sein de la charge utile et des équipements de voie montante de la station sol secondaire correspondant au signal E5b, et désignés respectivement par $HW_{PLE5b}$ et $HW_{NLESE5bup}$ ;

.- d'un écart temporel de pilotage de la deuxième station NLES secondaire 202 de génération du SBAS secondaire E5b, égal à la différence temporelle entre le temps local de la deuxième station NLES secondaire 202 et le temps du réseau SBAS ENT, et désigné par $SO_{NLESE5B}$.

Le calculateur de contrôle 280 est configuré pour déterminer et appliquer une deuxième commande de phase corrigée de la porteuse du signal SBAS secondaire généré à partir :

.- de la première commande de phase corrigée $RC_{E5b}$ du code du signal SBAS secondaire E5b généré;

.- du deuxième retard de propagation ionosphérique iono$_{E5b}$ du canal de la voie montante correspondant à une transposition du signal L5 sur la voie montante, et

.- de la somme $\varphi_{PL_{E5b}} + \varphi_{NLES_{E5bup}}$ d'un premier décalage de phase $\varphi_{PL_{ESb}}$ causé par la charge utile du satellite SBAS et d'un deuxième décalage de phase $\varphi_{NLES_{E5b}}$ causé par des équipements de voie montante de la deuxième station NLES secondaire 102 sur la transmission du signal SBAS secondaire E5b.

Le premier retard, le deuxième retard, l'écart temporel de pilotage de la deuxième station NLES secondaire 202, et la somme des premier et deuxième décalages de phase forment un vecteur d'état, noté X, à quatre composantes.

Le calculateur de contrôle 280 de la deuxième station NLES 202 est configuré pour estimer les quatre composantes du vecteur d'état à partir des mesures de phase actuelles de la porteuse et du code du signal SBAS secondaire, désignées respectivement par $ADR_{E5b}$ et $PR_{E5b}$, des mesures de phase actuelles de la porteuse et du code du signal L5 secondaire, désignées respectivement par $ADR_{L5}$ et $PR_{L5}$, les mesures étant fournies par le récepteur bi-fréquences L5/E5b 232, et à partir de la commande actuelle de phase du code et de la commande actuelle de la phase de la porteuse, appliquées au signal SBAS secondaire généré et désignés respectivement par $RCactuel_{E5b}$, et $PCactuel_{E5b}$, et un ensemble de paramètres prédéterminés.

Le calculateur de contrôle 280 est configuré pour calculer le troisième retard, représentatif de l'effet Sagnac en voie montante du signal E5b, dans une étape séparée de l'étape d'estimation du vecteur d'état.

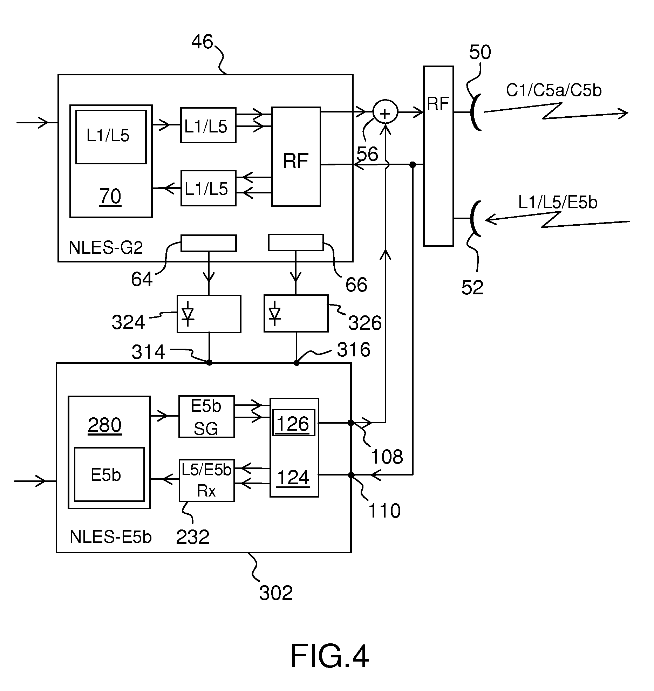

Suivant la Figure 4 et un troisième mode de réalisation 302 de la deuxième station NLES 48 pour générer et émettre en voie montante un signal SBAS secondaire, l'architecture de la deuxième station NLES 302 est dérivée de l'architecture de la deuxième station NLES secondaire 202.

La deuxième station NLES secondaire 302 diffère de la deuxième station NLES 202 de la Figure 3 en ce qu'elle comprend :

.- un quatrième port d'interface 314, configuré pour recevoir le signal d'horloge émis par l'horloge de référence locale 64 de la première station NLES-G2 46 de transmission d'un signal bi-fréquences L1/L5 de niveau sécuritaire SoL dans les bandes L1 et L5; et
.- un cinquième port d'interface 316 configuré pour recevoir le signal d'impulsion, émis par l'unité 66 de la première station NLES-G2 et dérivé du signal de l'horloge 64 et répété périodiquement à une fréquence plus basse que celle de l'horloge.

A l'instar de la deuxième station NLES secondaire 202 de la Figure 3, la deuxième station NLES secondaire 302 est dépourvue du troisième port d'interface 112 et de la réception de données de pilotage et de données de sortie de l'algorithme de boucle longue L1/L5 en provenance de la première station NLES-G2 46.

La deuxième station NLES secondaire 302 est configurée pour faire exécuter par son calculateur électronique de contrôle 280 les mêmes traitements et les mêmes commandes de phases suivant les mêmes algorithmes que ceux mis en oeuvre pour la deuxièmes station 202 de la Figure 3.

Les quatrième et cinquième ports d'interface 314, 316 sont chacun protégés par un pare-feu respectif 324, 326 de manière à assurer une liaison unidirectionnelle différente et entrante sur chacun des ports d'interface et protéger ainsi la première station NLES-G2 de la remontée d'un quelconque signal perturbateur.

Dans toutes les configurations d'architecture de la deuxième station NLES 48, 102, 202, 302 décrites ci-dessus, la première commande de phase corrigée du code et la deuxième commande de phase de la porteuse à appliquer au générateur du signal SBAS secondaire, par exemple ici E5b, sont respectivement fournies par les équations 1 et 2 suivantes :

$$RC_{E5b} = -\left(SR_{E5b} + tropo_{E5b} + iono_{C5b} + SagnacUp_{E5b} + HW_{PL_{E5b}} + HW_{NLES_{E5bup}} - SO_{NLES_{E5b}}\right)$$

Equation 1

$$PC_{E5b} = RC_{E5b} - \left(-2 \times iono_{C5b} + \varphi_{PL_{E5b}} + \varphi_{NLES_{E5b}}\right)$$

Equation 2

dans lesquelles

.- $RC_{E5b}$ désigne la commande de la phase du code du signal SBAS secondaire E5b,

.- $PC_{E5b}$ désigne la commande de la phase de la porteuse du signal SBAS secondaire E5b,

.- $SR_{E5b}$ désigne la distance géométrique entre le centre de phase de l'antenne de réception du satellite et le centre de phase de l'antenne d'émission de la deuxième station NLES sol de génération du signal SBAS secondaire E5b,

.- $tropo_{E5b}$ désigne le retard troposphérique affectant le signal E5b,

.- $iono_{C5b}$ désigne le retard ionosphérique subi par le signal de voie montante correspondant au signal de voie descendante E5b, centré ici sur une fréquence centrale d'un canal de bande C désigné par C5b,

.- $SagnacUp_{E5b}$ désigne le retard représentatif de l'effet Sagnac de voie montante, cet effet de voie montante étant défini comme un retard supplémentaire, subi par un signal se propageant depuis la station sol d'émission du signal de voie montante jusqu'au satellite et causé par la rotation de la Terre pendant la durée de propagation du signal,

.- $HW_{PLE5b}$ désigne un retard supplémentaire égal au temps de transit du signal E5b au sein de la charge utile à partir de la réception du signal de voie montante, ici C5b,

.- $HW_{NLESE5bup}$ désigne un retard supplémentaire égal au temps de transit des équipements de la deuxième station sol SBAS et de formation du signal de voie montante C5b depuis le générateur du signal E5b émis,

.- $\varphi_{PLE5b}$ désigne un premier décalage de phase affectant le signal E5b et causé par des équipements de la charge utile du satellite,

.- $\varphi_{NLESE5bup}$ désigne un deuxième décalage de phase affectant le signal E5b et causé par les équipements de la deuxième station NLES secondaire de formation de la voie montante C5b, et

.- $SO_{NLESE5b}$ désigne le décalage de pilotage de la deuxième station NLES de génération du signal SBAS secondaire E5b, c'est-à-dire la différence entre le temps de référence local de la deuxième station NLES E5b et le temps ENT du réseau EGNOS.

Les différents paramètres, utilisés dans les équations 1 et 2, doivent être déterminés et traduits en fonction des paramètres ou des données fournies par les différentes architectures de la deuxième station NLES secondaire et leur mode respectif associé d'intégration dans le système EGNOS pour calculer les première et deuxième commandes de phase corrigées à appliquer respectivement au code et à la porteuse du signal secondaire SBAS généré.

Des détails de ces déterminations sont fournis en fonction des configurations utilisées, c'est-à-dire dans un premier cas lorsque la deuxième station NLES E5b comporte un récepteur mono-fréquence d'un signal mono-fréquence E5b, et dans un deuxième cas lorsque la deuxième station NLES E5b comporte un récepteur bi-fréquences d'un signal bi-fréquences L5/E5b.

Dans les deux cas, il est supposé que le pilotage du signal de la première station NLE-G2 est parfait. Il est ainsi supposé que le pilotage du signal SBAS secondaire E5b est soumis à toute erreur de pilotage affectant le pilotage du signal L5 de niveau SoL.

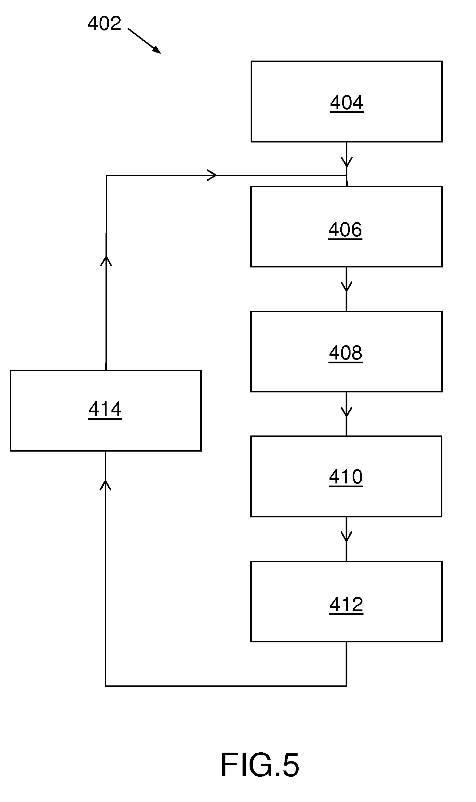

Suivant la Figure 5, un procédé de génération 402 d'un signal SBAS secondaire destiné à supporter des services de dissémination de données de navigation est mis en oeuvre par une deuxième station NLES indépendante et comprend un ensemble d'étapes.

Dans une première étape d'initialisation 404, une première commande de phase actuelle du code et une deuxième commande de phase actuelle de la porteuse d'un signal SBAS secondaire sont mises respectivement à une première valeur initiale et une deuxième valeur initiale.

Dans une deuxième étape 406, des données à diffuser, la première commande de phase actuelle du code et la deuxième commande de phase actuelle de la porteuse du signal SBAS secondaire sont fournies au générateur de signal SBAS secondaire.

Puis, dans une troisième étape 408, le signal SBAS secondaire est généré par le générateur de signal secondaire à partir des données à diffuser, de la première commande de phase actuelle du code et de la deuxième commande de phase actuelle de la porteuse dans une bande secondaire de voie descendante, ici la bande E5b.

Ensuite, dans une quatrième étape 410, un récepteur reçoit le signal SBAS secondaire dans la bande secondaire de voie descendante et réalise une première mesure actuelle de la phase du code et une deuxième mesure actuelle de la phase de la porteuse du signal SBAS secondaire.

Dans une cinquième étape 412 successive, le calculateur de contrôle détermine une première commande de phase corrigée du code et une deuxième commande de phase corrigée de la porteuse à appliquer au signal secondaire généré à partir au moins de la première commande de phase actuelle du code, de la deuxième commande de phase actuelle de la porteuse, de la première mesure actuelle de la phase du code et de la deuxième mesure actuelle de la phase de la porteuse du signal SBAS secondaire.

Ensuite, dans une sixième étape 414 de rebouclage, la première commande de phase actuelle du code et la deuxième commande de phase actuelle de la porteuse sont mises respectivement à la première commande de phase corrigée du code et à la deuxième commande de phase corrigée de la porteuse du signal SBAS secondaire généré.

Puis, les deuxième, troisième, quatrième, cinquième, sixième étapes 406, 408, 410, 412, 414 sont répétées successivement jusqu'à ce qu'une décision d'arrêt du procédé intervienne.

Ainsi, la synchronisation et la cohérence du code par rapport à la porteuse du signal SBAS secondaire reçu est réalisée au travers d'une boucle de correction de la phase de la porteuse et de la phase du code du signal SBAS secondaire généré par le générateur de la première chaîne d'émission, ce qui permet d'obtenir une continuité et une disponibilité des services de dissémination des données satisfaisantes.

Premier cas: récepteur mono-fréquence E5b

Dans le premier cas d'une architecture de la deuxième station NLES utilisant un récepteur mono-fréquence, le pilotage de la phase de la porteuse et du code du signal SBAS secondaire émis dépend de deux types de données d'entrée que sont les commandes de pilotage du signal L5 et des sorties dudit Algorithme de Boucle Longue L1/L5 délivrées au premier port d'interface par la première station NLES-G2, et dépend de mesures actuelles de la phase du code et de la phase de la porteuse du signal Eb5 reçu par le récepteur mono-fréquence.

La première commande de phase du code du signal L5 à appliquer au générateur du signal L5 et fournie par la première station NLES-G2 est exprimée suivant l'équation 3 suivante :

$$RC_{L5} = - \left( SR_{L5} + tropo_{L5} + iono_{C5a} + SagnacUp_{L5} + HW_{PL_{L5}} + HW_{NLES_{L5up}} - SO_{NLES_{L5}} \right)$$

Equation 3

Les hypothèses suivantes sont faites concernant les différents termes des expressions relatives aux commandes de phase appliquées aux signaux L5 et E5b :

.- $SR_{E5b} = SR_{L5} = SR$, car en supposant que la même antenne est utilisée et partagée pour l'envoi des signaux L5 and E5b signaux transposés respectivement dans les canaux de voie montante C5a et C5b, la distance géométrique entre l'antenne d'émission partagée par les première et deuxième stations NLES et l'antenne de réception du satellite est la même pour les deux signaux,

.- $tropo_{E5b} = tropo_{L5}$ comme le retard de propagation troposphérique est indépendant de la fréquence,

.- $SagnacUp_{E5b} = SagnaCUp_{L5} = SagnacUp$, car le retard représentatif de l'effet Sagnac dépend seulement de la géométrie du système, et les deux stations NLES partagent la même antenne sol d'émission et la même antenne satellite de réception pour les deux signaux de voie montante C5a et C5b correspondant aux deux signaux émis L5 et E5b, .- $iono_{C5b} = iono_{C5a} \times \left( \dfrac{Fcarrier_{C5a\_nominal}}{Fcarrier_{C5b\_nominal}} \right)^2$, lequel $F_{carrier\_C5a\_nominal}$ et

$F_{carrier\_C5b\_nominal}$ désignent respectivement les fréquences centrales des signaux de voie montante C5a et C5b,

.- $SO_{NLES_{E5b}} = SO_{NLES_{L5}}$ compte tenu que la première station NLES-G2 et la deuxième station NLES E5b sont supposées partager la même horloge locale de référence dans l'architecture de deuxième station NLES E5b à récepteur mono-fréquence.

L'expression de la nouvelle commande de phase du code à appliquer au signal secondaire E5b généré s'écrit alors :

$$RC_{E5b} = - \left( SR_{L5} + tropo_{L5} + iono_{C5a} \times \left( \frac{Fcarrier_{C5a\_nominal}}{Fcarrier_{C5b\_nominal}} \right)^2 + SagnacUp_{L5} + HW_{PL_{E5b}} + HW_{NLES_{E5bup}} - SO_{NLES_{L5}} \right)$$

Equation 4

En variante, on suppose que $HW_{PL_{E5b}} = HW_{PL_{L5}}$. Dans ce cas, à partir des équations 1 et 3, la différence entre les expressions des commandes de phase des codes des signaux L5 et E5b conduisent à l'équation 4bis ci-dessous :

$$RC_{L5} - RC_{E5b} = -\left\{ \left(iono_{C5a} - iono_{C5b}\right) + \left(HW_{NLES_{L5}} - HW_{NLES_{E5b}}\right)\right\}$$
$$= -\left\{iono_{C5a} \times \left[1 - \left(\frac{Fcarrier_{C5a\_nominal}}{Fcarrier_{C5b\_nominal}}\right)^2\right]\right.$$
$$\left. + \left(HW_{NLES_{L5up}} - HW_{NLES_{E5bup}}\right)\right\}$$

Equation 4bis

Dans cette variante, il est ainsi supposé que seuls la commande de phase du code du signal L5 et le retard ionosphérique du signal de voie montante C5a sont fournis comme données de sortie de l'algorithme de boucle longue L1/L5 par la première station NLES-G2 au troisième port d'interface 112 de la deuxième station NLES secondaire, les retards supplémentaires $HW_{PL_{E5b}}$ et $HW_{NLES_{ESbup}}$ étant prédéterminés par une calibration préalable en usine de la charge utile et des équipements de réception du signal secondaire E5b sur la voie descendante, ou par une calibration effectuée en opération à l'aide de signaux de calibration supplémentaires.

Comme indiqué ci-dessus, les mesures de la phase du code et de la phase de la porteuse du signal E5b reçu par le récepteur mono-fréquence permettent d'estimer l'écart de la phase de la porteuse du signal E5b, et ainsi de contrôler la cohérence de phase entre le code et la porteuse du signal secondaire E5b.

La mesure de la phase actuelle du code et la mesure de la mesure de la phase actuelle de la porteuse du signal secondaire E5b reçu par le récepteur mono-fréquence sont modélisées par les équations 5 et 6 suivantes :

$$PR_{E5b} = RCactuel_{E5b} + 2 \times SR_{L5} + 2 \times tropo_{L5} + iono_{C5b}$$
$$\times \left(1 + \left(\frac{Fcarrier_{C5b_{nominal}}}{Fcarrier_{E5b_{nominal}}}\right)^2\right) + HW_{PL} + HW_{NLES_{E5bup}}$$
$$+ HW_{NLES_{E5bDwn}} + LA$$

Equation 5

et

$$ADR_{E5b} = PCactuel_{E5b} + 2 \times SR_{L5} + 2 \times tropo_{L5} - iono_{C5b}$$
$$\times \left(1 + \left(\frac{Fcarrier_{C5b_{nominal}}}{Fcarrier_{E5b_{nominal}}}\right)^2\right) + HW_{PL} + HW_{NLES_{E5bup}}$$
$$+ HW_{NLES_{E5bDwn}} + \varphi_{PL_{E5b}} + \varphi_{NLES_{E5bup}} + LA$$

Equation 6

dans lesquelles:

- $ADR_{E5b}$ désigne la mesure actuelle de la phase de la porteuse du signal secondaire E5b reçu par le récepteur mono-fréquence ;
- $PR_{E5b}$ désigne la mesure actuelle de la phase du code du signal secondaire E5b reçu par le récepteur mono-fréquence
- $PCactuel_{E5b}$ désigne la commande actuelle de phase de la porteuse appliquée au signal E5b émis et affectant la mesure actuelle;
- $RCactuel_{E5b}$: désigne la commande actuelle de phase du code appliquée au signal E5b émis et affectant la mesure actuelle;
- LA désigne le bras de levier (en anglais Lever Arm) défini comme la différence des étendues géométriques de la liaison montante et de la liaison descendante entre le satellite et la deuxième station NLES, et calculée à partir des positions des antennes de réception et d'émission du satellite et des positions des antennes de la voie montante et de la voie descendante de la deuxième station NLES, étant supposé que la position du satellite est connue à chaque seconde ;

- $HW_{NLES_{E5bDwn}}$ désigne un retard supplémentaire égal au temps de transit des équipements de réception du signal E5b en voie descendante de la deuxième station NLES-E5b ;
- $Fcarrier_{E5b_{nominal}}$ désigne la fréquence centrale du signal secondaire E5b généré en voie montante avant transposition ou reçu en voie descendante par la deuxième station NLES-E5b,

$$iono_{C5b} = iono_{C5a} \times \left(\frac{Fcarrier_{C5a\_nominal}}{Fcarrier_{C5b\_nominal}}\right)^2,$$

Il est supposé ici que les décalages possibles de phase ou incohérences du code par rapport à la porteuse introduites par le récepteur mono-fréquence sont négligés.

Les équations 5 et 6 prennent en compte également l'approximation selon laquelle l'effet Sagnac du signal C5b correspondant au signal E5b en voie montante et l'effet Sagnac du signal E5b en voie descendante sont égaux, ce qui s'écrit :

$$|SagnacUp_{E5b}| = |SagnacDwn_{E5b}|$$

A partir des équations 5 et 6, la différence entre les mesures actuelles de phase du code et de la porteuse du signal secondaire E5b s'écrit suivant l'équation ci-dessous :

$$ADR_{E5b} - PR_{E5b}$$
$$= PCactuel_{E5b} - RCactuel_{E5b} - 2 \times iono_{C5b}$$
$$\times \left(1 + \left(\frac{Fcarrier_{C5b_{nominal}}}{Fcarrier_{E5b_{nominal}}}\right)^2\right) + \varphi_{PL_{E5b}} + \varphi_{NLES_{E5bup}}$$

Equation 7

Suivant l'équation 7, l'unique inconnue restante qui est le décalage de phase du signal E5b causé conjointement par la charge utile et les équipements de la voie montante de la deuxième station NLES-E5b, c'est-à-dire la somme des termes $\varphi_{PL_{E5b}}$ et $\varphi_{NLES_{E5bup}}$, est déterminé. Une fois le décalage de phase déterminé par l'équation 7, la deuxième commande phase corrigée, à appliquer à la phase de la porteuse du signal secondaire E5b généré à l'émission, est déterminée à partir de l'équation 2, et s'écrit :

$$PC_{E5b} = RC_{E5b}$$
$$- \left(-2 \times iono_{C5a} \times \left(\frac{Fcarrier_{C5a\_nominal}}{Fcarrier_{C5b\_nominal}}\right)^2 + \varphi_{PL_{E5b}}\right.$$
$$\left. + \varphi_{NLES_{E5b}}\right)$$

Equation 8

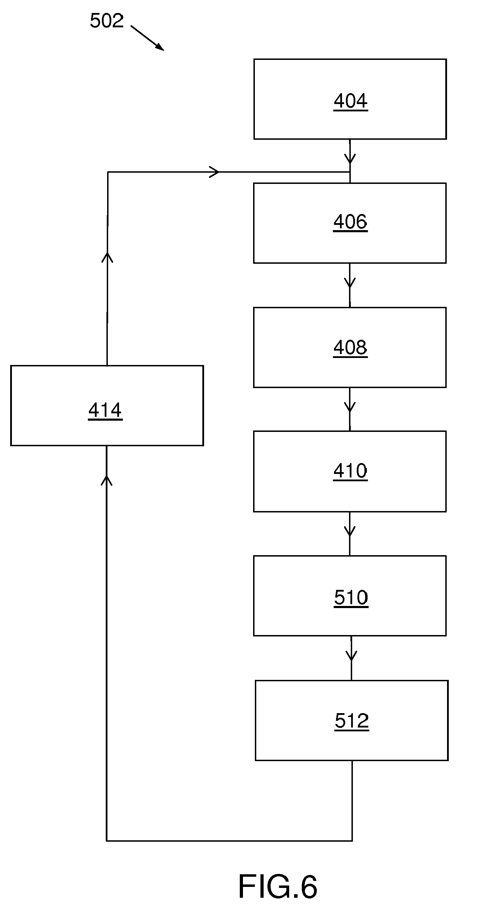

Suivant la Figure 6, un premier mode de réalisation 502 particulier du procédé général 402 de la Figure 5 concerne le cas d'utilisation d'un récepteur mono-fréquence E5b dans la deuxième station NLES secondaire, c'est-à-dire le premier mode de réalisation 102 de la deuxième station NLES secondaire décrite dans la Figure 2.

Le procédé 502 est dérivé du procédé général 402 et comprend de manière identique les étapes 404, 406, 408, 410, 414.

Le procédé 502 diffère du procédé général 402 en ce qu'il comprend une septième étape 510 supplémentaire disposée immédiatement avant ou après la quatrième étape 410 et en ce que la cinquième étape 412 est remplacée par une huitième étape 512.

Dans la septième étape 510, le calculateur reçoit au travers du troisième interface 112 des données de pilotage concernant une première station NLES-G2, et des données de sortie élaborées par un algorithme de boucle longue d'un signal SoL de la même première station NLES-G2 46.

Dans la huitième étape 512, le calculateur de contrôle détermine une première commande de phase corrigée du code et une deuxième commande de phase corrigée de la porteuse à appliquer au signal secondaire généré.

La première commande de phase corrigée du code est fonction des données de pilotage et des données de sortie de l'algorithme de boucle longue du signal L5 et déterminée par l'équation 4 ou 4bis.

La deuxième commande de phase corrigée de la porteuse est fonction de la première commande de phase actuelle du code, de la deuxième commande de phase actuelle de la porteuse du signal SBAS secondaire, de la première mesure actuelle de la phase du code et de la deuxième mesure actuelle de la phase de la porteuse du signal SBAS secondaire et de données de sortie de l'algorithme de boucle longue du signal L5 .

Puis, les deuxième, troisième, quatrième, septième, huitième, sixième étapes 406, 408, 410, 510, 512, 414 sont répétées successivement jusqu'à ce qu'une décision d'arrêt du procédé intervienne.

Deuxième cas: récepteur bi-fréquences L5/E5b

Dans le cas où la deuxième station NLES comporte un récepteur bi-fréquences L5/E5b , la première station NLES de génération d'un signal bi-fréquences L1/L5 de niveau sécuritaire SoL et la deuxième station NLES secondaire de génération d'un signal secondaire mono-fréquence E5b sont complètement séparées. Aucun paramètre de la première station NLES-G2 L1/L5 n'est transmis par la première station NLES-G2 L1/L5 à la deuxième station de génération du signal secondaire E5b. Les première et deuxième stations NLES secondaire disposent chacune de leur propre horloge de référence locale sans lien entre elles. Suivant cette configuration, le pilotage en phase du code et de la porteuse du signal secondaire E5b dépend seulement de mesures de la phase du code et de la porteuse du signal secondaire E5b reçu par le récepteur bi-fréquence et de mesures de la phase du code et de la porteuse du signal de niveau SoL L5 reçu par le récepteur bi-fréquences. Le signal secondaire E5b reçu en voie descendante et le signal de niveau SoL L5 reçu en voie descendante correspondent respectivement au signal secondaire E5b généré par la deuxième station NLES-E5b secondaire et au signal L5 de niveau SoL généré par la première station NLES-G2. Les mesures actuelles de phase sont effectuées par le récepteur bi-fréquences et traitées par le calculateur de contrôle 280.

Les expressions de la première commande de phase corrigée du code et la deuxième commande de phase corrigée de la porteuse à appliquer au générateur du signal SBAS secondaire, ici E5b, sont respectivement les mêmes que celles des équations 1 et 2 ci-dessus et sont rappelées ci-après :

$$RC_{E5b} = - \left( SR_{E5b} + tropo_{E5b} + iono_{C5b} + SagnacUp_{E5b} + HW_{PL_{E5b}} + HW_{NLES_{E5bup}} - SO_{NLES_{E5b}} \right)$$

Equation 1

et

$$PC_{E5b} = RC_{E5b} - \left( -2 \times iono_{C5b} + \varphi_{PL_{E5b}} + \varphi_{NLES_{E5b}} \right)$$

Equation 2

Des variables d'états à estimer forment un vecteur d'état note X qui s'écrit:

$$X = \begin{bmatrix} SR_{E5b} + tropo_{E5b} \\ iono_{E5b} \\ SO_{NLES_{E5b}} \\ \varphi_{E5b} \end{bmatrix}$$

Equation 9

dans lequel :

.- une première variable d'état est la somme d'un premier terme $SR_{E5b}$ désignant la distance géométrique entre le centre de phase de l'antenne de réception du satellite et le centre de phase de l'antenne d'émission de la deuxième station NLES sol de génération du signal SBAS secondaire E5b, et d'un deuxième terme $tropo_{E5b}$, désignant le retard troposphérique affectant le signal E5b;

.- une deuxième variable d'état est le retard ionosphérique $iono_{E5b}$ subi par le signal de voie descendante et lié au retard ionosphérique $iono_{C5b}$ du signal C5b de voie montante par la relation $iono_{C5b} = iono_{E5b} \times \left(\dfrac{Fcarrier_{E5b\_nominal}}{Fcarrier_{C5b\_nominal}}\right)^2$, dans laquelle $Fcarrier_{E5b_{nominal}}$ désigne la fréquence centrale du signal secondaire E5b de voie descendante et $Fcarrier_{C5b_{nominal}}$ désigne la fréquence centrale du signal de voie montante C5b correspondant au signal secondaire E5b généré par la deuxième station NLES-E5b,

.- une troisième variable d'état est un décalage de phase $\varphi_{E5b}$ égal à la somme $\varphi_{PL_{E5b}} + \varphi_{NLES_{E5bup}}$ d'un premier terme $\varphi_{PL_{E5b}}$ désignant un premier décalage de phase affectant le signal E5b et causé par des équipements de la charge utile du satellite, et d'un deuxième terme $\varphi_{NLES_{E5bup}}$ désignant un deuxième décalage de phase affectant le signal E5b et causé par les équipements de la deuxième station NLES de formation de la voie montante C5 ; et

.- une quatrième variable d'état est le décalage de pilotage $SO_{NLES_{E5b}}$ de la deuxième station NLES secondaire de génération du signal SBAS secondaire E5b, c'est-à-dire la différence entre le temps de référence local de la deuxième station NLES secondaire et le temps ENT du réseau EGNOS, ce décalage de pilotage étant différent de celui de la première station L1/L5 NLES-G2 et devant être estimé, en raison du fait que les deux stations NLES ne partagent pas une même horloge de référence locale, ni d'ailleurs d'autres informations.

Les mesures de phase actuelles du code et de la porteuse du signal secondaire E5b obéissent à l'instar de la configuration utilisant un récepteur mono-fréquence aux mêmes équations de modélisation 5 et 6 qui sont rappelées pour mémoire ci-dessous.

$$PR_{E5b} = RCactuel_{E5b} + 2 \times SR_{E5b} + 2 \times tropo_{E5b} + iono_{E5b}$$
$$\times \left(1 + \left(\frac{Fcarrier_{E5b_{nominal}}}{Fcarrier_{C5b_{nominal}}}\right)^2\right) + HW_{PL} + HW_{NLES_{E5bup}}$$
$$+ HW_{NLES_{E5bDwn}} + LA$$

et

$$ADR_{E5b} = PCactuel_{E5b} + 2 \times SR_{E5b} + 2 \times tropo_{E5b} - iono_{E5b}$$
$$\times \left(1 + \left(\frac{Fcarrier_{E5b_{nominal}}}{Fcarrier_{C5b_{nominal}}}\right)^2\right) + HW_{PL} + HW_{NLES_{E5bup}}$$
$$+ HW_{NLES_{E5bDwn}} + \varphi_{PL_{E5b}} + \varphi_{NLES_{E5bup}} + LA$$

S'agissant des mesures de phases du signal L5 par le récepteur bi-fréquence, il est supposé que le pilotage de première station L1/L5 NLES-G2 est parfait. Sous cette hypothèse, les mesures de phase actuelles du code et de la porteuse du signal L5 par le récepteur bi-fréquence peuvent être modélisées par les équations 10 et 11 suivantes :

$$PR_{L5} = SR_{E5b} + tropo_{E5b} + iono_{L5} + HW_{NLES_{L5Dwn}} - SO_{NLES_{E5b}} + LA$$

Equation 10

et

$$ADR_{L5} = SR_{E5b} + tropo_{E5b} - iono_{L5} + HW_{NLES_{L5Dwn}} - SO_{NLES_{E5b}} + LA$$

Equation 11

dans lesquelles

- HW$_{NLES_{L5Dwn}}$ désigne un retard supplémentaire égal au temps de transit des équipements de réception du signal L5 en voie descendante de la deuxième station NLES-E5b ;

Toutes les équations ci-dessus supposent qu'en pratique, c'est-à-dire de manière réaliste, les équipements de voie descendante de la deuxième station NLES n'introduisent aucune incohérence de phase entre le code et la porteuse des signaux reçus par le récepteur bi-fréquence.

Un ensemble ou système d'observables forment un vecteur d'observable Z qui s'écrit sous la forme d'un vecteur-colonne :

$$
Z = \begin{bmatrix}
PR_{E5b} - RCactuel_{E5b} - HW_{PL} - HW_{NLES_{E5bup}} - HW_{NLES_{E5bDwn}} - LA \\
ADR_{E5b} - PCactuel_{E5b} - HW_{PL} - HW_{NLES_{E5bup}} - HW_{NLES_{E5bDwn}} - LA \\
PR_{L5} - HW_{NLES_{L5Dwn}} - LA \\
ADR_{L5} - HW_{NLES_{L5Dwn}} - LA
\end{bmatrix}
$$

Equation 12

dans lequel les première, deuxième, troisième, quatrième observables sont rangés de haut en bas.

Une matrice de mesures s'écrit :

$$
H = \begin{bmatrix}
2 & \alpha_{12} & 0 & 0 \\
2 & -\alpha_{12} & 0 & 1 \\
1 & \alpha_{32} & -1 & 0 \\
1 & -\alpha_{32} & -1 & 0
\end{bmatrix}
$$

Equation 13

dans laquelle $\alpha_{13} = 1 + \left( \dfrac{Fcarrier_{E5b_{nominal}}}{Fcarrier_{C5b_{nominal}}} \right)^2$ et $\alpha_{32} = \left( \dfrac{Fcarrier_{E5b_{nominal}}}{Fcarrier_{L5b_{nominal}}} \right)^2$.

Le vecteur d'états X, le vecteur d'observable Z et la matrice de mesure vérifient la relation :

$$
\mathbf{H} \times \mathbf{X} = \mathbf{Z}
$$

Equation 14

dans laquelle X est le vecteur inconnu.

La matrice H est inversible et s'écrit :

$$
H^{-1} = \begin{bmatrix}
1/2 & 0 & \beta_{13} & \beta_{14} \\
0 & 0 & \beta_{23} & \beta_{24} \\
1/2 & 0 & \beta_{33} & \beta_{34} \\
-1 & 1 & \beta_{43} & \beta_{44}
\end{bmatrix}
$$

dans laquelle pour j variant de 1 à 4, $\beta_{j3}$ et $\beta_{j4}$ sont différent de zéro.

Une fois les inconnues de X déterminées, des équations 1 et 2 on déduit :

$$RC_{E5b} = - \left( SR_{E5b} + tropo_{E5b} + iono_{E5b} \times \left( \frac{Fcarrier_{E5b\_nominal}}{Fcarrier_{C5b\_nominal}} \right)^2 \right.$$
$$\left. + SagnacUp_{E5b} + HW_{PL_{E5b}} + HW_{NLES_{E5bup}} - SO_{NLES_{E5b}} \right)$$

Equation 15

et

$$PC_{E5b} = RC_{E5b} - \left( -2 \times iono_{E5b} \times \left( \frac{Fcarrier_{E5b\_nominal}}{Fcarrier_{C5b\_nominal}} \right)^2 + \varphi_{E5b} \right)$$

Equation 16

Suivant une variante de l'architecture du deuxième mode de réalisation, la deuxième station NLES secondaire comporte à l'instar du deuxième mode de réalisation un récepteur bi-fréquence et diffère de ce deuxième mode en ce qu'elle partage en commun avec la première station L1/L5 NLES-G2 son horloge de référence locale à 10 MHz et son unité de génération. Dans ce cas, les mêmes équations que celles du deuxième mode de réalisation sont applicables et le procédé décrit ci-dessus n'est pas modifié. Dans cette variante la complexité et coût du matériel de la deuxième station ont diminué au détriment d'un augmentation du risque sécuritaire.

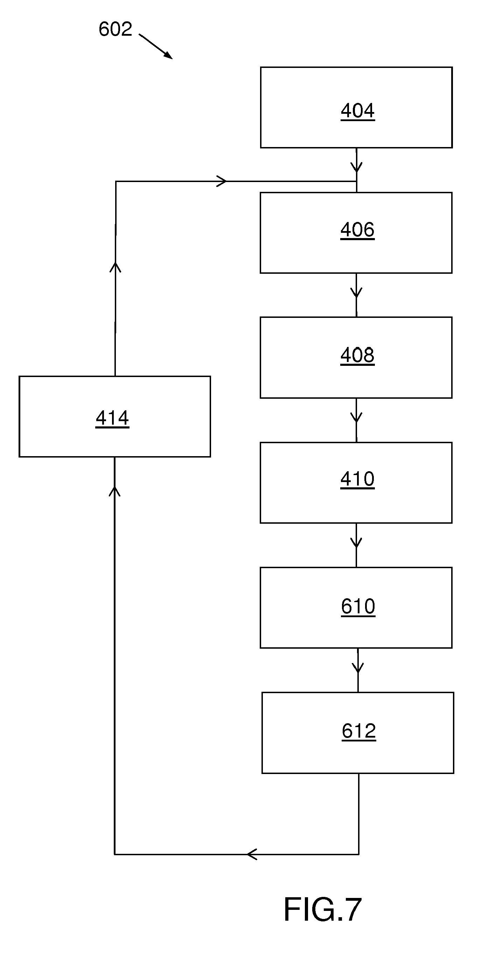

Suivant la Figure 7, un deuxième mode de réalisation 602 particulier du procédé général 402 de la Figure 5 concerne le cas d'utilisation d'un récepteur bi-fréquences L5/E5b dans la deuxième station NLES secondaire, c'est-à-dire les deuxième et troisième modes de réalisation 202 et 302 de la deuxième station décrite dans la Figure 3 et la Figure 4.

Le procédé 602 est dérivé du procédé général 402 et comprend de manière identique les étapes 404, 406, 408, 410, 414.

Le procédé 602 diffère du procédé général 402 en ce qu'il comprend une neuvième étape 610 supplémentaire, disposée immédiatement avant ou après ou en parallèle de la quatrième étape 410, et en ce que la cinquième étape 412 est remplacée par une dixième étape 612.

Dans la neuvième étape 610, le récepteur bi-fréquences reçoit le signal L5 dans la bande secondaire L5 de voie descendante et réalise une première mesure de phase actuelle du code et une deuxième mesure de phase actuelle de la porteuse du signal L5.

Dans la dixième étape 612, le calculateur de contrôle 280 détermine une première commande de phase corrigée du code et une deuxième commande de phase corrigée de la porteuse à appliquer au signal secondaire généré.

La première commande de phase corrigée du code du signal SBAS secondaire généré est fonction de la première commande de phase actuelle du code et de la deuxième commande de phase actuelle de la porteuse du signal SBAS secondaire, de la première mesure de phase actuelle du code et de la deuxième mesure de phase actuelle de la porteuse du signal SBAS secondaire, de la première mesure de phase actuelle du code et de la deuxième mesure de phase actuelle de la porteuse du signal L1 émis par la première station NLES-G2, suivant les équations 9 et 12 à 15.

La deuxième commande de phase corrigée de la porteuse du signal SBAS secondaire généré est fonction de la première commande de phase actuelle du code et de la deuxième commande de phase actuelle de la porteuse du signal SBAS secondaire, de la première mesure de phase actuelle du code et de la deuxième mesure de phase actuelle de la porteuse du signal SBAS secondaire, de la première mesure de phase actuelle du code et de la deuxième mesure de phase actuelle de la porteuse du signal L5 émis par la première station NLES-G2, suivant les équations 9 et 12 à 16.

Puis, les deuxième, troisième, quatrième, septième, huitième, sixième étapes 406, 408, 410, 610, 612, 414 sont répétées successivement jusqu'à ce qu'une décision d'arrêt du procédé intervienne.

La solution préférée est l'architecture de la deuxième station NLES secondaire 202 selon le deuxième mode de réalisation décrit dans la Figure 2. Cette architecture préférée est fondée sur la réalisation d'un compromis entre, premièrement une séparation et une isolation suffisante entre la première station NLES-G2 et la deuxièmes station NLES pour la qualifier de secondaire, deuxièmement un contrôle suffisant de la synchronisation et de la cohérence en phase du code par rapport à la porteuse du signal SBAS secondaire pour assurer de bonnes performances en termes de continuité et de disponibilités de services de dissémination de données GNSS, et troisièmement un nombre minimal d'équipements complexes.

La deuxième station NLES secondaire est couplée de façon monodirectionnelle avec la première station NLES-G2, et elle est munie d'un récepteur mono-fréquence ajusté pour recevoir sélectivement en bande E5b.

La solution préférée permet de garantir l'absence d'impacts sur les services en L1/L5 en raison d'un nombre minimal et d'une maîtrise en terme de sécurité des ports de couplage. Elle permet de garantir également :

.- de bonnes performances de continuité et de disponibilité de service grâce au récepteur E5b et aux couplages, permettant de garantir la synchronisation et la cohérence du code par rapport à la porteuse du signal E5b ;

.- une complexité et un coût de matériel plus faible que celui d'une NLES L1/L5 classique par suppression de matériels tels que notamment l'horloge, les unités de calibration, le boitier d'intégrité ;

.- un complexité et un coût logiciel moindre que celui d'un NLES classique en raison de l'absence d'implémentation d'algorithme complexe de pilotage ;

.- un développement non soumis aux contraintes SoL, en particulier aux exigences de niveau de DAL DO178B, en raison de l'indépendance de la NLES E5b par rapport à al NLES L1/L5, ce qui entraîne un coût de développement réduit.

Toutefois, les architectures des deuxième et troisième modes de réalisation décrites dans les Figures 3 et 4 sont également intéressantes si un renforcement de la séparation et de l'isolation entre la première station NLES-G2 et la deuxièmes station NLES secondaire est recherché.

Il est à remarquer que toutes les architectures et les algorithmes décrits ci-dessus dans le cas où la bande secondaire utilisée est la bande E5b restent valides si la bande secondaire utilisée est la bande E6. Il suffit pour cela de remplacer tous les libellés « 5b » inclus dans le texte de description et les équations décrites ci-dessus par le libellé « 6 », par exemple « E5b » sera remplacé par « E6 » et « C5b » sera remplacé par « C6 ».

Les satellites géostationnaires peuvent être remplacés par des satellites évoluant sur d'autres types d'orbites, par exemple des orbites HEO ou MEO.

## Revendications

1. Station NLES secondaire de génération d'un signal secondaire d'un système d'augmentation par satellites SBAS destiné à supporter des services de dissémination de données, comprenant

   .- une chaine d'émission (104) du signal SBAS secondaire dans une bande radiofréquence RF de voie montante (16) ayant un générateur (122) du signal SBAS secondaire dans une bande SBAS secondaire et un premier port (108) de sortie RF de voie montante ; et

   .- une chaine de réception (106), configurée pour recevoir dans la bande SBAS secondaire en un deuxième port d'entrée RF (110) de voie descendante (18) un signal SBAS secondaire issu de la chaîne d'émission (104) et retransmis par un satellite SBAS (10) associé, et contrôler la synchronisation et la cohérence du code par rapport à la porteuse du signal SBAS secondaire reçu au travers d'une boucle de correction de la phase de la porteuse et de la phase du code du signal SBAS secondaire du signal émis par la chaîne d'émission (104) ;

   la station NLES étant dépourvue d'équipements pouvant impacter la génération de signaux SBAS existants de niveau SoL par une première station NLES-G2 et étant **caractérisée en ce que**
   la chaine d'émission (104) comporte un filtre de sortie (126), ajusté sélectivement sur une bande de largeur de 20 MHz centrée sur la fréquence centrale d'un canal RF de voie montante correspondant à une fréquence de transposition près au canal du signal SBAS secondaire, généré par la chaîne d'émission (104).

2. Station NLES secondaire de transmission d'un signal SBAS secondaire selon la revendication 1, dans laquelle la chaine de réception (106) comprend
   un récepteur mono-fréquence (132) ajusté pour recevoir sélectivement le signal SBAS secondaire dans la bande secondaire, ou
   un récepteur bi-fréquences (232) ajusté pour recevoir sélectivement le signal SBAS secondaire dans la bande secondaire et un signal SBAS de niveau SoL dans la bande L5, large de 24 MHz et centrée sur la fréquence de 1176,45 MHz.

3. Station NLES secondaire de transmission d'un signal SBAS secondaire selon l'une quelconque des revendications 1 et 2, dans laquelle la bande secondaire est la bande du canal E5b, large de 24 MHz et centrée sur la fréquence de 1207,14 MHz, ou la bande du canal E6, large de 24 MHz et centrée sur la fréquence de 1278,75 MHz.

4. Station NLES secondaire de transmission d'un signal SBAS secondaire selon l'une quelconque des revendications 1 à 3,

dans laquelle la chaine de réception (106) comprend un récepteur mono-fréquence (132) ajusté pour recevoir sélectivement le signal SBAS secondaire dans la bande secondaire, et

comprenant en outre

un troisième port d'interface (112), configuré pour recevoir des données de pilotage, des données de sortie élaborées par un algorithme de boucle longue en provenance d'une première station NLES-G2 (46) de transmission d'un signal bi-fréquences L1/L5 de niveau de sécurité SoL dans les bandes L1 et L5, la bande L1 étant large de 24 MHz et centrée sur la fréquence de 1575,42 MHz ;

un quatrième port d'interface (114), configuré pour recevoir un signal d'horloge émis par une horloge de référence locale (64) de la première station NLES-G2 (46) ; et

un cinquième port d'interface (116), configuré pour recevoir un signal d'impulsion dérivé du signal d'horloge et répété périodiquement à une fréquence plus basse que celle de l'horloge.

5. Station NLES secondaire de transmission d'un signal SBAS secondaire selon la revendication 4, dans laquelle au moins le troisième port d'interface (112) est protégé par un pare-feu (118), de préférence les troisième, quatrième et cinquième ports (112, 114, 116) étant chacun protégés par un pare-feu de manière à assurer une liaison unidirectionnelle entrante dans la station NLES secondaire.

6. Station NLES secondaire de transmission d'un signal SBAS secondaire selon l'une quelconque des revendications 4 à 5, dans laquelle la chaine de réception (106) comporte un calculateur électronique de contrôle (120), connecté au récepteur mono-fréquence (132), et

le calculateur de contrôle (120) est configuré pour déterminer une première commande de phase corrigée du code et une deuxième commande de phase corrigée de la porteuse à appliquer au signal SBAS secondaire généré par la chaîne d'émission (104),

la première commande de phase corrigée du code étant déterminée à partir d'un premier retard englobant l'effet de la distance géométrique séparant une antenne de réception (14) du satellite SBAS (10) et une antenne d'émission sol (50), partagée en commun par la station NLES secondaire et la première station NLES-G2 (46), et l'effet du retard de propagation troposphérique du signal L5 ;

d'un deuxième retard de propagation ionosphérique du canal de la voie montante correspondant à une transposition en voie montante du signal L5 ; d'un troisième retard représentatif de l'effet Sagnac en voie montante du signal L5 ;

d'un quatrième retard et d'un cinquième retard, représentatifs respectivement des temps de transit du signal SBAS secondaire au sein de la charge utile (12) du satellite (10) et des équipements de voie montante de la station NLES secondaire ; et

d'un écart temporel de pilotage de la première station NLES-G2 de génération du signal bi-fréquences L1/L5 égal à la différence temporel entre le temps local de la première station NLES-G2 et le temps du réseau SBAS ENT ; et

la deuxième commande de phase corrigée de la porteuse étant déterminée à partir

de la première commande de phase corrigée du code du signal SBAS secondaire généré,

du deuxième retard de propagation ionosphérique du canal de la voie montante correspondant à une transposition du signal L5 sur la voie montante, et

de la somme d'un premier décalage de phase, causé par la charge utile (12) du satellite SBAS (10) associé, et d'un deuxième décalage de phase, causé par des équipements de voie montante de la station NLES secondaire sur la transmission du signal SBAS secondaire ;

les premier, deuxième, troisième retards en tant que données de sortie de l'algorithme de boucle longue L1/L5 de la station NLES-G2, et l'écart temporel de pilotage de la station sol NLES-G2 en tant que commande de pilotage sont délivrés par le troisième port d'interface ; et

le calculateur de contrôle (120) est configuré pour estimer la somme des premier et deuxième décalages de phase du signal SBAS secondaire à partir d'un première mesure de phase actuelle du code et d'une deuxième mesure de phase actuelle de la porteuse du signal SBAS secondaire fournies par le récepteur mono-fréquence, de la première commande de phase actuelle du code et de la deuxième commande de phase de la porteuse actuellement appliquées au signal SBAS secondaire, et du deuxième retard ionosphérique.

7. Station NLES secondaire de transmission d'un signal SBAS secondaire selon la revendication 6, dans laquelle

.- la première commande de phase corrigée du code du signal SBAS secondaire émis est égale à moins la différence entre

un premier terme égal à la somme du premier retard, du deuxième retard multiplié par le carré du rapport de la porteuse du signal L5 sur la porteuse du signal SBAS secondaire, du troisième retard, du quatrième retard, du cinquième retard, et d'un deuxième terme égal à l'écart temporel de pilotage de la première station NLES-G2 (46) de génération du signal L5; et

.- la deuxième commande de phase corrigée de la porteuse du signal SBAS secondaire est égale à la différence entre la première commande de phase corrigée du code du signal SBAS secondaire, et

la différence entre la somme des premier et deuxième décalages de phase du signal SBAS secondaire estimés à partir des première et deuxième mesures de phase actuelles du code et de la porteuse du signal SBAS secondaire fournies par le récepteur mono-fréquence, et le double du deuxième retard ionosphérique multiplié par le carré du rapport de la porteuse du signal L5 sur la porteuse de voie montante du signal SBAS secondaire.

8. Station NLES secondaire de transmission d'un signal SBAS secondaire selon l'une quelconque des revendications 1 à 3,

dans laquelle la chaine de réception (106) comprend un récepteur bi-fréquences (232), ajusté pour recevoir sélectivement le signal SBAS secondaire dans la bande secondaire et un signal SBAS dans la bande L5, large de 24 MHz et centrée sur la fréquence de 1176,45 MHz,

la station NLES secondaire comprenant une horloge de référence locale (252), et une unité de génération (262) d'un signal d'impulsion, dérivé du signal d'horloge et répété périodiquement à une fréquence plus basse que celle de l'horloge (252), et

la station NLES secondaire étant dépourvue de ports d'interface permettant d'émettre un signal quelconque pouvant perturber la génération des signaux SoL L1 et L5 par une première station NLES-G2.

9. Station NLES secondaire de transmission d'un signal SBAS secondaire selon l'une quelconque des revendications 1 à 3,

dans laquelle la chaine de réception (106) comprend un récepteur bi-fréquences, ajusté pour recevoir sélectivement le signal SBAS secondaire dans la bande secondaire et un signal SBAS de niveau SoL émis par une première station NLES-G2 dans la bande L5, large de 24 MHz et centrée sur la fréquence de 1176,45 MHz,

la station NLES secondaire comprenant en outre

un quatrième port d'interface (314), configuré pour recevoir un signal d'horloge émis par une horloge de référence locale (64) d'une première station NLES-G2 de transmission (46) d'un signal bi-fréquences L1/L5 de niveau SoL dans les bandes L1 et L5, la bande L1 étant large de 24 MHz et centrée sur la fréquence de 1575,42 MHz ; et

un cinquième port d'interface (316), configuré pour recevoir un signal d'impulsion dérivé du signal d'horloge et répété périodiquement à une fréquence plus basse que celle de l'horloge (64), et

la station sol secondaire étant dépourvue d'un troisième port d'interface, configuré pour recevoir des données de pilotage ou des données de sortie élaborées par un algorithme de boucle longue d'un signal bi-fréquence L1/L5 en provenance de la première station NLES-G2 (46).

10. Station NLES secondaire de transmission d'un signal SBAS secondaire selon la revendication 9, dans laquelle les quatrième et cinquième ports (314, 316) sont chacun protégés par un pare-feu (324, 326) de manière à assurer une liaison unidirectionnelle différente et entrante sur chacun des ports d'interface (314, 316).

11. Station NLES secondaire de transmission d'un signal SBAS secondaire selon l'une quelconque des revendications 8 à 10, dans laquelle la chaine de réception (106) comporte un calculateur électronique de contrôle (280), connecté au récepteur bi-fréquences (232), et

le calculateur électronique de contrôle (280) est configuré pour déterminer une première commande de phase corrigée du code et une deuxième commande de phase corrigée de la porteuse à appliquer au signal SBAS secondaire généré par la chaîne d'émission (104),

la première commande de phase corrigée du code étant déterminée à partir d'un premier retard englobant l'effet de la distance géométrique séparant l'antenne de réception du satellite SBAS et l'antenne d'émission sol (50) du signal SBAS secondaire partagée en commun par la station NLES secondaire et la première station NLES-G2 (46), et l'effet du retard de propagation troposphérique sur le signal SBAS secondaire,

d'un deuxième retard de propagation ionosphérique du canal SBAS secondaire ;

d'un troisième retard représentatif de l'effet Sagnac en voie montante du signal SBAS secondaire;

d'un quatrième retard et d'un cinquième retard représentatifs respectivement des temps de transit du signal SBAS secondaire au sein de la charge utile et des équipements de voie montante de la station sol secondaire ; et

d'un écart temporel de pilotage de la station NLES secondaire de génération du signal SBAS secondaire égal à la différence temporelle entre le temps local de la station NLES secondaire et le temps du réseau SBAS ENT ; et

la deuxième commande de phase corrigée de la porteuse du signal SBAS secondaire est déterminée à partir de la première commande de phase corrigée du code du signal SBAS secondaire généré ;

du deuxième retard de propagation ionosphérique du signal SBAS secondaire, et

de la somme d'un premier décalage de phase causé par la charge utile du satellite SBAS et d'un deuxième décalage de phase causé par des équipements de voie montante de la station sol secondaire sur la transmission du signal SBAS secondaire ; et

le calculateur électronique de contrôle (280) est configuré pour estimer les premier et deuxième retards, ainsi que l'écart temporel de pilotage de la station NLES secondaire de génération du signal SBAS secondaire et la somme des premier et deuxième décalages de phase du signal SBAS secondaire à partir

de première et deuxième mesures de phase actuelle du code et de la porteuse du signal SBAS secondaire reçu par le récepteur bi-fréquence (232); et

de la première commande de phase actuelle du code et de la deuxième commande de phase actuelle de la porteuse appliquées au signal SBAS générés ; et

des quatrième et des cinquième retards ; et

d'un sixième retard et d'un septième retard, représentatifs respectivement des temps de transit du signal SBAS secondaire et L5 au sein des équipements de voie descendante de la station sol SBAS ; et

d'un huitième retard LA, représentatif d'un effet de bras de levier, défini comme la différence entre la distance séparant les antennes de voie montante depuis l'antenne d'émission partagée par la station SBAS secondaire vers l'antenne de réception partagée du satellite et la distance séparant les antennes de voie descendante depuis l'antenne d'émission partagée du satellite vers l'antenne de réception partagée de la station sol SBAS;

les quatrième, cinquième, sixième, et septième retards sont prédéterminés ; et le troisième retard est calculé par le calculateur séparément de l'estimation.

12. Station NLES secondaire de transmission d'un signal SBAS secondaire selon la revendication 11, dans laquelle

.- la première commande de phase corrigée du code du signal SBAS secondaire généré est égale à moins la différence entre un premier terme égal à la somme du premier retard, du deuxième retard, du troisième retard, du quatrième retard et du cinquième retard, et un deuxième terme égal à l'écart temporel de pilotage de la station NLES secondaire ; et

.- la deuxième commande de phase corrigée de la porteuse du signal SBAS secondaire est égale à la différence entre

la première commande de phase corrigée du code du signal SBAS secondaire, et

la différence entre la somme estimée des premier et deuxième décalages de phase du signal SBAS secondaire et le double du deuxième retard ionosphérique multiplié par le carré du rapport de la porteuse du signal SBAS secondaire de voie descendante sur la porteuse de voie montante du signal SBAS secondaire.

13. Station NLES secondaire de transmission d'un signal SBAS secondaire selon l'une quelconque des revendications 1 à 12, dans laquelle la bande RF de voie montante du signal SBAS secondaire est comprise dans l'ensemble des bandes C et Ku.

14. Procédé de génération par une station NLES secondaire d'un signal SBAS secondaire, destiné à supporter des services de dissémination de données de navigation,

la station NLES secondaire étant dépourvue d'équipements pouvant impacter la génération de signaux SBAS existants de niveau de sécurité SoL par une première station NLES-G2, comprenant une chaine d'émission mono-fréquence du signal SBAS secondaire dans une bande RF de voie montante, la chaîne d'émission incluant elle-même un générateur du signal SBAS secondaire dans une bande secondaire identique à la bande de voie descendante du signal SBAS secondaire, **caractérisé en ce que** le procédé de génération comprend les étapes consistant à :

.- dans une première étape d'initialisation 404, une première commande de phase actuelle du code et une deuxième commande de phase actuelle de la porteuse d'un signal SBAS secondaire sont mises respectivement à une première valeur initiale et une deuxième valeur initiale ; puis

.- dans une deuxième étape (406), des données de dissémination de services de navigation, la première commande de phase actuelle du code et la deuxième commande de phase actuelle de la porteuse du signal SBAS secondaire sont fournies au générateur du signal SBAS secondaire; puis

. - dans une troisième étape (408), le signal SBAS secondaire est généré par le générateur de signal secondaire à partir des données de dissémination de services de navigation, de la première commande de phase actuelle du code et de la deuxième commande de phase actuelle de la porteuse, et filtré par un filtre de sortie (126), ajusté sélectivement sur une bande de largeur de 20 MHz centrée sur la fréquence centrale d'un canal RF de voie montante correspondant à une fréquence de transposition près au canal du signal SBAS secondaire, généré par la chaîne d'émission (104); puis

.- dans une quatrième étape (410), un récepteur d'une chaîne de réception de la station NLES secondaire reçoit le signal SBAS secondaire dans la bande secondaire de voie descendante et réalise une première mesure de phase actuelle du code et une deuxième mesure de phase actuelle de la porteuse du signal SBAS secondaire ;

.- puis dans une cinquième étape (412), un calculateur de contrôle détermine une première commande de phase corrigée du code et une deuxième commande de phase corrigée de la porteuse à appliquer au signal secondaire généré à partir au moins de la première commande de phase actuelle du code, de la deuxième commande de phase actuelle de la porteuse, de la première mesure de la phase du code et de la deuxième mesure de la phase de la porteuse du signal SBAS secondaire ; puis

. - dans une sixième étape (414) de rebouclage, la première commande de phase actuelle du code et la deuxième commande de phase actuelle de la porteuse sont mis respectivement à la première commande de phase corrigée du code et à la deuxième commande de phase corrigée de la porteuse du signal SBAS secondaire généré ; puis

.- les deuxième, troisième, quatrième, cinquième, sixième étapes (406, 408, 410, 412, 414) sont répétées successivement jusqu'à ce qu'une décision d'arrêt du procédé intervienne.

**15.** Procédé de génération d'un signal SBAS secondaire selon la revendication 14,

dans lequel le récepteur (132) de la chaine de réception est un récepteur mono-fréquence ajusté pour recevoir sélectivement le signal SBAS secondaire dans la bande secondaire, et

comprenant une septième étape (510) supplémentaire, disposée immédiatement avant ou après la quatrième étape (410), dans laquelle le calculateur de contrôle (120) reçoit au travers d'un troisième interface (112) de la station NLES secondaire (102) des données de pilotage concernant une première station NLES-G2 (46), et des données de sortie élaborées par un algorithme de boucle longue d'un signal SoL de la même première station NLES-G2 (46) ; et

comprenant une huitième étape (512) remplaçant la cinquième étape (412) dans laquelle le calculateur de contrôle (120 détermine une première commande de phase corrigée du code et une deuxième commande de phase corrigée de la porteuse à appliquer au signal secondaire généré,

.- la première commande de phase corrigée du code étant fonction des données de pilotage et des données de sortie de l'algorithme de boucle longue du signal L5 fournies par la première station NLES-G2 (46), et

.- la deuxième commande de phase corrigée de la porteuse étant fonction de la première commande de phase actuelle du code, de la deuxième commande de phase actuelle de la porteuse du signal SBAS secondaire, de la première mesure actuelle de la phase du code et de la deuxième mesure actuelle de la phase de la porteuse du signal SBAS secondaire et de données de sortie de l'algorithme de boucle longue du signal L5 ; et

dans lequel les deuxième, troisième, quatrième, septième, huitième, sixième étapes (406, 408, 410, 510, 512, 414) sont répétées successivement jusqu'à ce qu'une décision d'arrêt du procédé intervienne.

**16.** Procédé de génération d'un signal SBAS secondaire selon la revendication 14,

dans lequel le récepteur (232) de la chaine de réception est un récepteur bi-fréquences, ajusté pour recevoir sélectivement le signal SBAS secondaire dans la bande secondaire et le signal L5 émis par la première station NLES-G2 (46) et retransmis par le même satellite (10); et

comprenant une neuvième étape (610) supplémentaire, disposée immédiatement avant ou après ou en parallèle de la quatrième étape (410), dans laquelle le récepteur bi-fréquences (232) reçoit le signal L5 dans la bande secondaire L5 de voie descendante et réalise une première mesure de phase actuelle du code et une deuxième mesure de phase actuelle de la porteuse du signal L5. ; et

comprenant une dixième étape (612) remplaçant la cinquième étape (412) dans laquelle le calculateur de contrôle (280) détermine une première commande de phase corrigée du code et une deuxième commande de phase corrigée de la porteuse à appliquer au signal secondaire généré ,

.- la première commande de phase corrigée du code du signal SBAS secondaire généré étant fonction de la première commande de phase actuelle du code et de la deuxième commande de phase actuelle de la porteuse du signal SBAS secondaire, de la première mesure de phase actuelle du code et de la deuxième mesure de phase actuelle de la porteuse du signal SBAS secondaire, de la première mesure de phase actuelle du code et de la deuxième mesure de phase actuelle de la porteuse du signal L5 émis par la première station NLES-G2, et

.- la deuxième commande de phase corrigée de la porteuse du signal SBAS secondaire généré étant fonction de la première commande de phase actuelle du code et de la deuxième commande de phase actuelle de la porteuse du signal SBAS secondaire, de la première mesure de phase actuelle du code et de la deuxième mesure de phase actuelle de la porteuse du signal SBAS secondaire, de la première mesure de phase actuelle du code et de la deuxième mesure de phase actuelle de la porteuse du signal L5 émis par la première station NLES-G2 ; et

dans lequel les deuxième, troisième, quatrième, septième, huitième, sixième étapes (406, 408, 410, 610, 612, 414) sont répétées successivement jusqu'à ce qu'une décision d'arrêt du procédé intervienne.

**17.** Produit ou programme d'ordinateur comprenant un ensemble d'instructions configurées pour mettre en oeuvre une ou plusieurs des étapes du procédé défini selon l'une quelconque des revendications 14 à 16 lorsqu'elles sont chargées dans et exécutées par le calculateur de contrôle (120, 280) de la station NLES secondaire définie selon l'une quelconque des revendications 1 à 13 14.

FIG.1

FIG.2

FIG.3

FIG.4

402

404

406

408

410

414

412

# FIG.5

502

404

406

408

410

510

512

414

FIG.6

602

```
     ┌─────────────┐
     │     404     │
     └──────┬──────┘
            │
   ┌────────▼──────┐
   │      406      │
   └───────┬───────┘
           │
   ┌───────▼───────┐
   │      408      │
   └───────┬───────┘
           │
   ┌───────▼───────┐
   │      410      │
   └───────┬───────┘
           │
   ┌───────▼───────┐
   │      610      │
   └───────┬───────┘
           │
   ┌───────▼───────┐
   │      612      │
   └───────────────┘
```

┌─────────────┐
│     414     │
└─────────────┘

FIG.7

Europäisches
Patentamt

European
Patent Office

Office européen
des brevets

# RAPPORT DE RECHERCHE EUROPEENNE

**Numéro de la demande**

EP 15 19 6221

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X,D | BITAR H AL ET AL: "Augmenting EGNOS with an E5b Channel", ITM 2014 - PROCEEDINGS OF THE 2014 INTERNATIONAL TECHNICAL MEETING OF THE INSTITUTE OF NAVIGATION, THE INSTITUTE OF NAVIGATION, 8551 RIXLEW LANE SUITE 360 MANASSAS, VA 20109, USA, 29 janvier 2014 (2014-01-29), pages 280-291, XP056008088, * page 281 * * page 285, colonne de droite - page 289, colonne de gauche, alinéa 2ème * * page 291, colonne de gauche, alinéa 5ème et 6ème * | 1-17 | INV. G01S19/07 |
| A | KUBRAK D ET AL: "Performance Assessment of EGNOS 2nd Generation Navigation Land Earth Station", PTTI 2013 - PROCEEDINGS OF THE 45TH ANNUAL PRECISE TIME AND TIME INTERVAL SYSTEMS AND APPLICATIONS MEETING, THE INSTITUTE OF NAVIGATION, 8551 RIXLEW LANE SUITE 360 MANASSAS, VA 20109, USA, 5 décembre 2013 (2013-12-05), pages 306-314, XP056008318, * page 306 - page 309 * | 1-17 | |
| A | US 2005/219119 A1 (HSU PO-HSIN [US]) 6 octobre 2005 (2005-10-06) * abrégé * * alinéa [0005] - alinéa [0007] * * alinéa [0013] - alinéa [0019] * * alinéa [0059] - alinéa [0062] * | 1-17 | |

**DOMAINES TECHNIQUES RECHERCHES (IPC)**

G01S

Le présent rapport a été établi pour toutes les revendications

| Lieu de la recherche | Date d'achèvement de la recherche | Examinateur |
|---|---|---|
| Munich | 16 mars 2016 | Haugg, Sabine |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 15 19 6221

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

16-03-2016

| Document brevet cité au rapport de recherche | Date de publication | Membre(s) de la famille de brevet(s) | Date de publication |
|---|---|---|---|
| US 2005219119 A1 | 06-10-2005 | US 2005219119 A1<br>WO 2007037789 A1 | 06-10-2005<br>05-04-2007 |

EPO FORM P0460

Pour tout renseignement concernant cette annexe : voir Journal Officiel de l'Office européen des brevets, No.12/82

**EP 3 026 460 A1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **H. AL BITAR et al.** Augmenting EGNOS with an E5b Channel. *ION,* 2014